# EUROPÄISCHE PATENTSCHRIFT

(11) **EP 3 230 647 B1**
(45) Veröffentlichungstag und Bekanntmachung des Hinweises auf die Patenterteilung: **01.08.2018**
(21) Anmeldenummer: 14824400.7
(22) Anmeldetag: 12.12.2014
(51) Int. Cl.: F16L 29/00

(54) **TROCKENKUPPLUNGS-AUFNAHMETEIL EINER FLUID-TROCKENKUPPLUNG SOWIE DAMIT EINGERICHTETE FLUID-TROCKENKUPPLUNG**
DRY CLUTCH RECEIVING PART OF A FLUID/DRY CLUTCH, AND FLUID/DRY CLUTCH HAVING SUCH A DRY CLUTCH RECEIVING PART
ÉLÉMENT DE LOGEMENT D'UN RACCORD À SEC POUR FLUIDE ET RACCORD À SEC POUR FLUIDE ÉQUIPÉ DUDIT ÉLÉMENT

(43) Veröffentlichungstag der Anmeldung: 18.10.2017
(73) Patentinhaber: Roman Seliger GmbH, 22848 Norderstedt (DE)
(72) Erfinder: HAMKENS, Hauke Peter, 25870 Oldenswort (DE); SYLLA, Jan-Oliver, 25832 Tönning (DE)
(74) Vertreter: Stork Bamberger Patentanwälte PartmbB
(86) Internationale Anmeldenummer: PCT/EP2014/077581
(87) Internationale Veröffentlichungsnummer: WO 2016/091327

(56) Entgegenhaltungen:
- EP-A1- 2 348 242
- DE-A1- 3 204 115
- DE-A1-102012 209 629
- DE-C1- 858 617
- US-A- 2 739 827
- US-A1- 2010 013 216

## Beschreibung

Die Erfindung betrifft ein Trockenkupplungs-Aufnahmeteil einer Fluid-Trockenkupplung, umfassend **(i)** ein sich entlang einer zentralen Aufnahmeteilachse axial erstreckendes rohrförmiges Aufnahmeteilgehäuse mit einem ersten Gehäuseende zum Kuppeln mit einem Trockenkupplungs-Steckteil der Trockenkupplung sowie mit einem zweiten Gehäuseende zur Verbindung mit einem Leitungselement; **(ii)** eine in dem Aufnahmeteilgehäuse angeordnete Aufnahmeteil-Ventileinrichtung, gebildet durch einen Führungs-Sitzring mit einer Sitzring-Innenwand sowie durch einen den Führungs-Sitzring mit einem Teil durchfassenden, an dem Führungs-Sitzring mittels eines Führungs-Radiallagers radial gelagerten und axial gleitbewegbaren Ventilkörper, wobei das Aufnahmeteilgehäuse und der Führungs-Sitzring zum Kuppeln mit dem Trockenkupplungs-Steckteil in Eingriff bringbare Anschlusselemente aufweisen, die zum Herstellen einer drehfesten Verbindung zwischen dem Führungs-Sitzring und dem Trockenkupplungs-Steckteil sowie zum Herstellen einer Drehverbindung zwischen dem Aufnahmeteilgehäuse und dem Trockenkupplungs-Steckteil eingerichtet sind, wobei der Ventilkörper einen Ventilkopf, einen außerhalb des Führungs-Sitzrings liegenden Ventilfuß sowie einen mittels des Führungs-Radiallagers an der Sitzring-Innenwand gelagerten Ventilstegteil aufweist, der den Ventilkopf und den Ventilfuß miteinander verbindet und axial beabstandet, wobei der Führungs-Sitzring an einem ersten Sitzringende einen Ventilsitz aufweist, der zusammen mit dem Ventilkopf ein Aufnahmeteil-Ventil bildet, wobei der Ventilkopf in Ventil-Schließposition dichtend in den Ventilsitz einfasst und in Ventil-Öffnungsposition an dem ersten Sitzringende aus dem Führungs-Sitzring hervortritt, und wobei das Aufnahmeteilgehäuse und der Führungs-Sitzring zum Kuppeln und Entkuppeln mit dem Trockenkupplungs-Steckteil relativ zueinander drehbar um die Aufnahmeteilachse angeordnet sind; **(iii)** eine Aufnahmeteil-Steuereinrichtung, mittels der der Ventilkörper in die Ventil-Öffnungsposition sowie umgekehrt in die Ventil-Schließposition bewegbar ist, umfassend eine um die Aufnahmeteilachse drehbare Steuerhülse mit einer Führungskulisse sowie Steuerelemente, die an dem Ventilfuß angeordnet sind und die in die Führungskulisse einfassen, wobei zentrale Körperachsen des Ventilkörpers, der Steuerhülse und des Führungs-Sitzrings koaxial mit der Aufnahmeteilachse sind, der Führungs-Sitzring und die Steuerhülse einen den Ventilkörper mit Fluidströmung beaufschlagenden Fluid-Durchgangsraum bilden, der axial bewegbar gelagerte Ventilkörper durch richtungsabhängige Drehung der Steuerhülse und entsprechende Axialverlagerung in die Ventil-Schließposition bzw. die Ventil-Öffnungsposition setzbar ist und das Aufnahmeteilgehäuse und die Steuerhülse zur gemeinsamen Drehung um die Aufnahmeteilachse miteinander vereinigt sind; **(iv)** eine Verriegelungseinrichtung zur lösbaren drehfesten Verbindung des Aufnahmeteilgehäuses und des Führungs-Sitzrings, umfassend **(iv.1)** ein Verriegelungs-Rastelement, das einen Rastelementfuß mit einer unterseitigen Fußkontaktfläche aufweist, die auf einem kreisförmigen Umfangs-Laufweg von einer Anfangsposition bis zu einer lösbaren definierten Verriegelungsposition unter Druck gegen eine korrespondierende Führungs-Lauffläche anliegt, die an einem an dem Führungs-Sitzring radial hervorstehenden Führungsrand ausgebildet ist und eine der Verriegelungsposition zugeordnete Verriegelungs-Raststelle aufweist, in die der Rastelementfuß in der Verriegelungsposition einrastet, wobei das Rastelement in einem an dem Aufnahmeteilgehäuse angeordneten Gleitlager unter Wirkung der Druckkraft gleitbewegbar gelagert ist, und **(iv.2)** eine Betätigungseinrichtung mit einem Betätigungselement, gebildet durch einen Betätigungshebel, der mittels eines Schwenklagers um eine Hebel-Schwenkachse schwenkbar angelenkt ist und mittels einer Mitnehmer-Verbindung mit dem Verriegelungs-Rastelement verbunden ist, wobei sich das Verriegelungs-Rastelement in Abhängigkeit von Schwenkstellungen des Betätigungshebels in einer Löseposition und in wenigstens einer genannten Verriegelungsposition befindet.

Eine Trockenkupplung setzt sich aus zwei Kupplungshälften zusammen, nämlich aus dem Aufnahmeteil oder Mutterteil sowie aus einem zugehörigen Steckteil oder Vaterteil. Zum Beispiel ist das Aufnahmeteil mit einer Treibstoff-Schlauchleitung verbunden, während das Steckteil einen Anschluss an einem Tank bildet. Eine gattungsgemäße Trockenkupplung weist eine typische Bauart und Funktion auf. Jede Kupplungshälfte umfasst ein Ventil mit einem Ventilkörper, der zum Öffnen und Schließen des zugehörigen Ventils axial verlagerbar ist. Im gekuppelten Zustand der beiden Kupplungshälften befinden sich die beiden Ventilkörper in einem Ventilverbund, der sich durch Drehbewegung eines mit einer Führungskulisse ausgestatteten Gehäuse-Steuerteils des Aufnahmeteils zum Öffnen und Schließen der Ventile axial verlagern lässt. Wenigstens der Ventilkörper des Steckteils wird mit Rückstellkraft beaufschlagt. Insbesondere weisen die Trockenkupplung und deren Bauteile gemäß einem NATO-Standardisierungseinkommen (STANAG) standardisierte Merkmale auf.

Ein Aufnahmeteil einer bekannten Trockenkupplung gemäß DE 10 2012 209 629 A1 weist eine Verriegelungseinrichtung mit einem Verriegelungs-Raststift auf, der senkrecht zur Aufnahmeteilachse radial gelagert ist und gegen eine axiale Umfangs-Lauffläche eines Führungsrandes arbeitet. Der Verriegelungs-Raststift wird mittels eines zweiarmigen Betätigungshebels angelenkt. Die Bedienung des Betätigungshebels von Hand ist insbesondere in Verbindung mit einem Gehäusehandgriff mühsam. Der Verriegelungs-Raststift fasst mit seinem Fuß nur teilweise in eine Verriegelungs-Raststelle ein. Ein zuverlässig sicheres Aufrechterhalten der Rastverbindung ist beeinträchtigt und die Verbindung ist verschleißanfällig. Aus DE 858 617 ist ein Trockenkupplungs-Aufnahmeteil mit einer Verriegelungseinrichtung bekannt, die einen an einem Kupplungs-Innengehäuse achsparallel gelagerten Verriegelungs-Raststift umfasst. Eine Betätigungseinrichtung weist einen um eine achsparallele Achse angelenkten Betätigungshebel auf, der nur in zwei Stellpositionen gebracht werden kann, nämlich in eine Verriegelungsposition des Raststiftes in einem Verriegelungsloch sowie in eine den Raststift von dem Verriegelungsloch freistellende Position.

Der Erfindung liegen die Ziele zugrunde, die Verriegelungseinrichtung hinsichtlich ergonomischer Handhabung und sicherer Verriegelungsfunktion zu verbessern.

Die Ziele werden in Verbindung mit den eingangs genannten Merkmalen dadurch erreicht, dass der Rastelementfuß parallel zur Aufnahmeteilachse gerichtet ist, dass die Führungs-Lauffläche durch eine radiale Stirnfläche des Führungsrandes gebildet ist und dass der Betätigungshebel ein einarmiger Hebel ist, wobei die ihn einarmig anlenkende Betätigungs-Schwenkachse quer zu der Aufnahmeteilachse gerichtet ist und wobei die Mitnehmer-Verbindung zwischen der Hebel-Schwenkachse und einem zur Betätigung freien Ende des Betätigungshebels angeordnet ist.

Das erfindungsgemäße Trockenkupplungs-Aufnahmeteil bestimmt auch eine erfindungsgemäße Fluid-Trockenkupplung, die aus dem Trockenkupplungs-Aufnahmeteil und einem damit verbundenen Trockenkupplungs-Steckteil gebildet ist, wobei das Trockenkupplungs-Steckteil ein Steckteil-Ventil mit einem Steckteil-Ventilkörper aufweist, der zusammen mit dem Aufnahmeteil-Ventilkörper einen axial verlagerbaren Schiebeverbund bildet, der gegen Rückstellkraft aus zugehörigen Ventil-Schließpositionen in Ventil-Öffnungspositionen setzbar ist. Vorteilhaft kann das Trockenkupplungs-Steckteil eine Umfangs-Anschlussnut aufweisen, in die Anschlusselemente des Trockenkupplungs-Aufnahmeteils in Umfangsrichtung rastfrei eingreifen.

Die Angabe "axial" wird jeweils im Zusammenhang als parallel zu oder in Richtung der zentralen Achse des Aufnahmeteilgehäuses (Aufnahmeteilachse) oder einer mit der Aufnahmeteilachse koaxialen Achse verstanden. Die Angabe "axial" bezieht sich insbesondere auf Teile oder Flächen, die sich in Axialrichtung erstrecken und in denen die Aufnahmeteilachse bzw. eine damit koaxiale Achse liegt. Die Angabe "radial" betrifft Richtungen, die von einer zugehörigen Achse ausgehen und senkrecht zu dieser Achse gerichtet sind, oder sie bezieht sich auf Teile oder Flächen, die sich in Bezug auf eine zentrale Achse dazu senkrecht und radial erstrecken.

Die erfindungsgemäße Gestaltung der Verriegelungseinrichtung ist mit besonderen Vorteilen verbunden. Insbesondere erreicht man mit der Anlenkung des einarmigen Hebels und der Anordnung der Mitnehmer-Verbindung, dass das freie Ende des Betätigungshebels am Umfang des Aufnahmeteilgehäuses in einem ergonomisch günstigen Zugriffsbereich zu liegen kommt. Der Betätigungshebel kann vorteilhaft in steiler Position zur Aufnahmeteilachse mit vorzugsweise einem Winkel von wenigstens nahezu 90° oder im Bereich von 90° ± 30° angeordnet werden. Zudem arbeitet der Rastelementfuß in optimaler Position gegen die Führungs-Lauffläche. Dadurch sind das Laufverhalten des Verriegelungs-Raststiftes sowie dessen Verrastung an der Verriegelungs-Raststelle verbessert. In jeder Position des Betätigungshebels wird der Rastelementfuß gegen den Führungsrand gedrückt.

Das Rastelement ist zwischen der Löseposition, in der der Rastelementfuß an der Führungs-Lauffläche anliegt, und wenigstens einer Rast-/Verriegelungsposition mittels des Gleitlagers linear achsparallel verstellbar. Die Mitnehmer-Verbindung setzt die Schwenkbewegung des Betätigungshebels in die achsparallele Bewegung des Rastelements um. Zweckmäßig ist der einarmige Betätigungshebel um eine zur Aufnahmeteilachse senkrechte Schwenkachse schwenkbar. Die Druckkrafteinrichtung umfasst vorteilhaft ein Rückstellkraft erzeugendes Federelement.

Vorteilhaft kann zwischen der Verriegelungs-Raststelle und dem Rastelementfuß eine besonders wirksame Verriegelungs-Formschlussverbindung ausgebildet werden, die durch formgleiche komplementäre Rastflächen bestimmt ist. Vorteilhaft wird die Verriegelungs-Raststelle durch eine Verriegelungsrastausnehmung gebildet. Diese ist vorteilhaft als lochartige Ausnehmung mit einer Boden-Kontaktfläche derart gestaltet, dass der Rastelementfuß in der Verriegelungsposition auch mit seiner Fußkontaktfläche in einen formgleichen formschlüssigen Sitz gelangt.

Besonders vorteilhaft wird die Gleitlagerung des Rastelements so eingerichtet, dass die achsparallele Verstellbewegung des Rastelements entlang des Umfangs-Laufweges in der Löseposition und in der Verriegelungsposition nur durch Anschlag der Fußkontaktfläche gegen die Führungs-Lauffläche sowie gegen einen Boden der Verriegelungs-Raststelle begrenzt wird.

Gemäß einer Gestaltung wird das Aufnahmeteilgehäuse teilweise und vorzugsweise in Gänze als Außengehäuse vorgesehen, an dem das Gleitlager zum Lagern des Rastelements angeordnet wird. Gemäß einer Gestaltung wird das Aufnahmeteilgehäuse getrennt von der Steuerhülse vorgesehen. Das Aufnahmeteilgehäuse und die Steuerhülse bilden dann zwei separate Bauteile, die mittels einer Formschlussverbindung drehfest miteinander verbunden sind.

Eine bevorzugte Gestaltung besteht darin, dass das Rastelement-Gleitlager mit einer direkt an dem Rastelement angreifenden Druckkrafteinrichtung ausgebildet ist. Der Betätigungshebel wird von einer Beaufschlagung mit Druckkraft zum Andrücken des Rastelementfußes gegen die Führungs-Lauffläche befreit.

In bevorzugter Gestaltung wird das Verriegelungs-Rastelement durch einen mit seiner Stiftachse parallel zur Aufnahmeteilachse gelagerten Verriegelungs-Raststift gebildet. Besonders vorteilhaft kann der Verriegelungs-Raststift mittels des Gleitlagers sowie der Mitnehmer-Verbindung um seine Stiftachse drehbar gelagert sein, wobei die Führungs-Lauffläche die Fußkontaktfläche nur teilweise, insbesondere nur im Bereich zwischen der Stiftachse und dem der Aufnahmeteilachse nächsten Fußrand des Verriegelungs-Raststiftes berührt. Durch diese Art der Berührung wird der Raststift in Drehung versetzt. Man erreicht einen besonders verschleißarmen Lauf des Verriegelungs-Raststiftes an der Führungs-Lauffläche.

Erfindungsgemäß lässt sich die Hebel-Schwenkachse des einarmigen Betätigungshebels an oder im Bereich der Wand des Aufnahmeteilgehäuses anordnen. Besonders vorteilhaft ist eine Anordnung der Hebel-Schwenkachse derart, dass sie einen vorzugsweise kleinsten Zylinderquerschnitt des Aufnahmeteilgehäuses sekantenartig schneidet. Der Ort der Anlenkung des Betätigungshebels lässt sich zur Aufnahmeteilachse hin versetzen. Dadurch wird der einarmige Betätigungshebel an der Außenseite des Aufnahmeteilgehäuses relativ steil und lang ausgerichtet. Insbesondere in Kombination mit dieser Anordnung der Hebel-Schwenkachse besteht eine besonders vorteilhafte Gestaltung darin, dass die Mitnehmer-Verbindung mit einem kurzen Hebelabschnitt von der Hebel-Schwenkachse und mit einem demgegenüber relativ langen Hebelabschnitt von dem freien Ende des Betätigungshebels beabstandet ist. Einen besonders kleinen kurzen Hebelabschnitt erreicht man dadurch, dass Anlenkenden eines Plattenhebels unter dem Zenit des Aufnahmeteilgehäuses liegen und die Mitnehmer-Verbindung im Bereich des Gehäusezenits vorgesehen wird. Vorteilhaft wird der gehäuseseitige Rand einer Betätigungsplatte an die Form des Aufnahmeteilgehäuses zwischen zwei Lagerstellen des Schwenklagers, insbesondere im Zenitbereich, angepasst.

Die erfindungsgemäße Verriegelungseinrichtung bildet mit einem Gehäuse-Griff des Kupplungs-Aufnahmeteils eine besonders günstige ergonomische Anordnung, die eine Einhandbedienung zulässt. Der Betätigungshebel wird als ein von Hand betätigbares Element vorgesehen, wobei das freie Hebelende in den Zugriffsbereich wenigstens eines Fingers einer den Gehäuse-Handgriff erfassenden Hand reicht. Der Gehäuse-Handgriff, der bei festgehaltenem Führungs-Sitzring zum Drehen des Aufnahmeteilgehäuses zusammen mit der Steuerhülse um die Aufnahmeteilachse eingerichtet ist, steht radial von dem Aufnahmeteilgehäuse ab.

Vorteilhaft wird der Gehäuse-Handgriff als flügelartiger Griffbügel mit einem einen Umfangsabschnitt des Aufnahmeteilgehäuses überfassenden Bügelsteg vorgesehen, wobei der Betätigungshebel vorzugsweise mittig zwischen dem Bügelsteg und dem Aufnahmeteilgehäuse angeordnet ist. Eine besonders bevorzugte Gestaltung besteht darin, dass der Betätigungshebel durch eine Handhabungsplatte gebildet ist, die sich zwischen zwei den Bügelsteg verbindenden Griffarmen erstreckt. Vorteilhaft kann dann das den Betätigungshebel anlenkende Schwenklager im Bereich von Stellen ausgebildet werden, an denen die Griffarme mit dem Aufnahmeteilgehäuse verbunden sind. Vorteilhaft kann der Betätigungshebel bzw. die Betätigungsplatte an den Griffarmen, vorzugsweise an Befestigungsenden des Griffbügels angelenkt werden. Insbesondere mit dieser Anordnung lässt sich die Hebel-Schwenkachse bis in den Querschnittsbereich der Steuerhülse legen. Mit einer derart tiefliegenden Hebel-Schwenkachse kann auch die Mitnehmer-Verbindung besonders tief bis zum Niveau des Außenumfangs der Steuerhülse oder eines insbesondere verjüngten Abschnitts des Aufnahmeteilgehäuses gelegt werden.

Zweckmäßig können Befestigungsenden des Gehäuse-Handgriffs im Bereich des Führungs-Sitzrings an dem Aufnahmeteilgehäuse befestigt werden.

Vorteilhaft kann die Betätigungseinrichtung mit einem elektrisch ansteuerbaren Stellglied ausgestattet sein. Das erfindungsgemäß angeordnete Verriegelungs-Rastelement lässt sich besonders einfach mit einem Stellglied verbinden, das zweckmäßig im Bereich der Mitnehmer-Verbindung an dem Aufnahmeteilgehäuse angeordnet wird. Vorteilhaft wird das elektrisch ansteuerbare Stellglied so eingerichtet, dass das Rastelement durch Steuerung des Stellgliedes mit elektrischen Steuersignalen in der Verriegelungsposition definiert festsetzbar und zum Entriegeln sowie zum Herstellen des Lösezustandes freigebbar ist.

Die erfindungsgemäße Verriegelungseinrichtung ist derart, dass an der Führungs-Lauffläche gewünschte Anfangs-, Zwischen- und/oder Endpositionen des Rastelements eingerichtet werden können. Insbesondere können mehrere Verriegelungs-Raststellen ausgebildet werden. Eine Gestaltung besteht darin, dass die Führungskulisse der Aufnahmeteil-Steuereinrichtung wenigstens eine Steuerkurve mit einer Steuerkurven-Raststelle aufweist, die der Öffnungsposition des Aufnahmeteil-Ventils zugeordnet ist und zu der eine genannte Verriegelungsposition des Verriegelungs-Rastelements gehört. Eine vorteilhafte Gestaltung besteht auch darin, dass die Führungskulisse der Aufnahmeteil-Steuereinrichtung wenigstens eine axiale Kulissenöffnung aufweist, die an einer dem Führungs-Sitzring zugewandten Seite zum Einsetzen von einem genannten Steuerelement in achsparallele Richtung offen ist und einer Verriegelungsposition des Führungs-Laufweges zugeordnet ist.

Die Anfangsposition des Umfangs-Laufweges ist insbesondere durch die Schließstellung des Aufnahmeteil-Ventils bestimmt. Wenigstens ein Steuerelement der Steuereinrichtung befindet sich dann am geschlossenen Ende einer Kulissenbahn der Führungskulisse, wobei das geschlossene Ende dem vorderseitigen Ende der Steuerhülse abgewandt ist. Insbesondere ist der Anfangsposition keine Verriegelungsposition zugeordnet.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und-möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als strukturell selbständiges Detailbeispiel für andere nicht oder nicht vollständig beschriebene, unter die Erfindung fallende Ausführungen und Gestaltungen zu verstehen. Im Folgenden wird insbesondere mit der Angabe "allgemein" ein solches Merkmal bezeichnet und verstanden, das isoliert von anderen Merkmalen eines oder mehrerer Ausführungsbeispiele zu dem erfindungsgemäßen Erfolg der allgemeinen Lehre der Erfindung beiträgt.

Es zeigen
- Fig. 1A, 1B: im Längsschnitt eine mit einem erfindungsgemäßen Trockenkupplungs-Aufnahmeteil ausgestattete erfindungsgemäße Trockenkupplung mit geschlossenen und geöffneten Ventilen,
- Fig. 2A, 2B: im Längsschnitt das mit einer erfindungsgemäßen Verriegelungseinrichtung eingerichtete Aufnahmeteil der Trockenkupplung gemäß Fig. 1A, 1B mit geschlossenem und geöffnetem Ventil,
- Fig. 3: in axonometrischer Explosionsdarstellung Teile der Trockenkupplung gemäß Fig. 1A und 1B,
- Fig. 4A, 4B: Ansichten einer Steuerhülse des Aufnahmeteils gemäß Fig. 2A, 2B,
- Fig. 5A, 5B: in rückwärtiger Ansicht sowie im Längsschnitt C-C eine Ventileinrichtung des Aufnahmeteils gemäß Fig. 2A, 2B mit Ventilkörper im Dichtsitz,
- Fig. 6A, 6B: in Längsansicht ein Aufnahmeteil gemäß Fig. 2A, 2B mit Detail-Ausschnitt einer erfindungsgemäßen Verriegelungseinrichtung,
- Fig. 7A, 7B: in Längsansicht das Aufnahmeteil gemäß Fig. 2A, 2B mit Detail-Ausschnitt der erfindungsgemäßen Verriegelungseinrichtung,
- Fig. 8: in Schnitt-Rückansicht das Aufnahmeteil gemäß Schnitt D-D in Fig. 2A mit einer erfindungsgemäßen Verriegelungseinrichtung und
- Fig. 9A, 9B: Schnittansichten gemäß A-A und B-B in Fig. 2A und 2B.

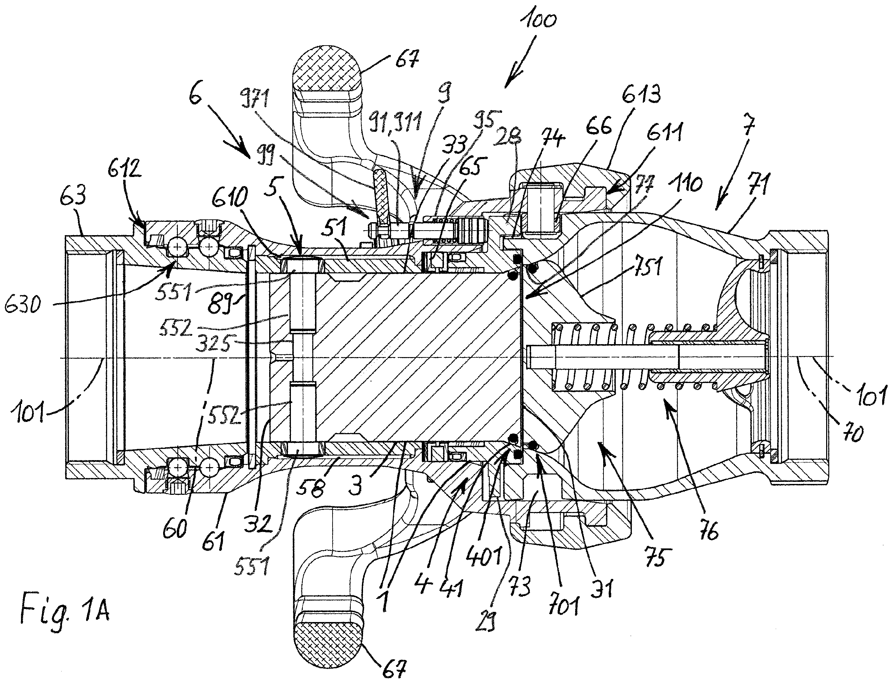

In der Fig. 1A bis Fig. 2B wird ein erfindungsgemäßes Trockenkupplungs-Aufnahmeteil 6 sowohl in der Einbauposition und -anordnung in einer Trockenkupplung 100 als auch davon getrennt dargestellt. Eine Ventileinrichtung 1 des Aufnahmeteils 6 ist mit einem Aufnahmeteil-Ventilkörper 3 ausgestattet. Die Ventileinrichtung 1 bildet im Ausführungsbeispiel ein eigenständiges Modulteil des Aufnahmeteils 6, nämlich eine Ventil-Baueinheit, die gleichfalls mit dem Bezugszeichen 1 bezeichnet wird.

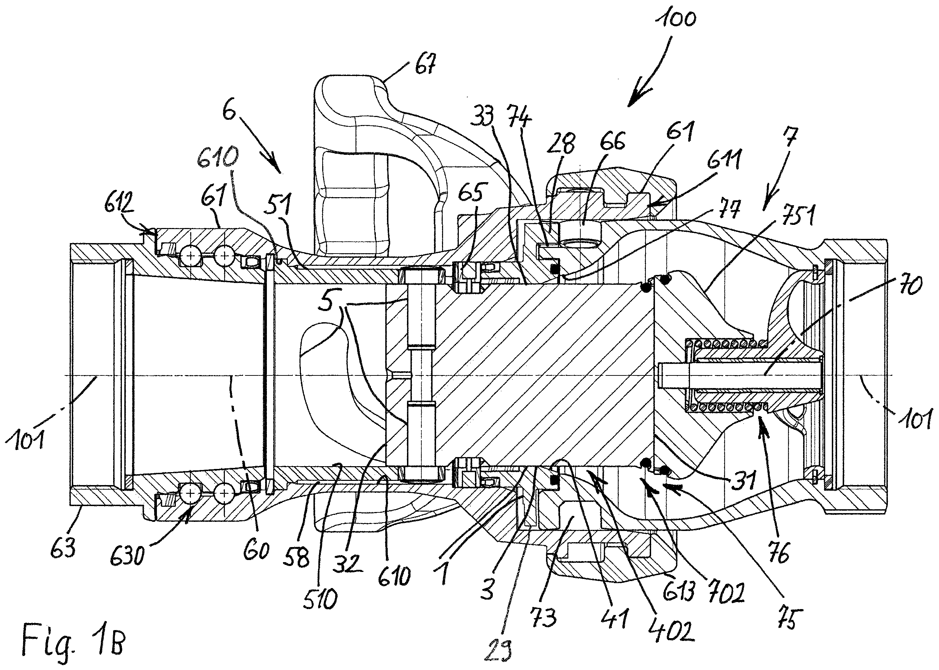

Die in Fig. 1A und 1B in gekuppeltem Zustand dargestellte Trockenkupplung 100 weist das Aufnahmeteil 6 (Mutterteil) und ein Steckteil 7 (Vaterteil) auf, die Kupplungshälften bilden. Das Aufnahmeteil 6 und das Steckteil 7 sind im Bereich einer Kupplungs-Trennstelle 110 aneinander gekuppelt. Eine Aufnahmeteilachse 60 und eine Steckteilachse 70 fallen in einer Kupplungsachse 101 zusammen. Im Kupplungszustand liegen an der Trennstelle 110 der Aufnahmeteil-Ventilkörper 3, der Bestandteil eines Aufnahmeteil-Ventils 4 ist, und ein Steckteil-Ventilkörper 751 eines Steckteil-Ventils 75 aneinander, wobei sie sich in einem in der Kupplungsachse 101 verlagerbaren Schiebeverbund befinden. Der Steckteil-Ventilkörper 751 ist in einem Steckteil-Gehäuse 71 gegen Federkraft einer Druckkrafteinrichtung 76 axial schiebebewegbar gelagert. Der Ventilkörper 3 ist innerhalb eines rohrförmigen Aufnahmeteilgehäuses 61 gelagert und in Axialrichtung in definierte Positionen translatorisch bewegbar. Eine Aufnahmeteil-Steuereinrichtung 5 setzt eine Drehbewegung des Aufnahmeteilgehäuses 61 um die Kupplungsachse 101 in die definierte translatorische Bewegung um. Gehäuse-Handgriffe 67 sind an dem Aufnahmeteilgehäuse 61 zur Drehverstellung angebracht.

In Fig. 1A befinden sich die Ventilkörper 3, 751 in Schließpositionen 401, 701 der Ventile 4 und 75. Fluid-Durchgang wird infolgedessen gesperrt. Der Ventilkörper 3 weist einen Ventilkopf 31 auf, der bei geschlossenem Aufnahmeteil-Ventil 4 in einen Aufnahmeteil-Ventilsitz 41 einfasst. An der Trennstelle 110 fasst der Steckteil-Ventilkörper 751 entsprechend in einen Steckteil-Ventilsitz 77 ein. Im Schließzustand der Ventile 4, 75 gemäß Fig. 1A können die Kupplungshälften durch Lösen von Anschlusselementen 66, 73, die sie verbinden, voneinander getrennt werden.

Ebenfalls ausgehend von dem Kupplungszustand gemäß Fig. 1A können die Ventile 4, 75 zum Durchleiten von Fluid durch die Trockenkupplung 100 geöffnet werden. Infolge einer definierten Drehverstellung einer Steuerhülse 51 der Aufnahmeteil-Steuereinrichtung 5, die drehfest mit dem Aufnahmeteilgehäuse 61 verbunden ist, wird der Ventilkörper 3 axial verlagert, so dass der Ventilkopf 31 den Ventilsitz 41 in einer Aufnahmeteil-Ventilöffnungsposition 402 verlässt und den Steckteil-Ventilkörper 751 gegen die Federkraft der Druckkrafteinrichtung 76 in eine Steckteil-Ventilöffnungsposition 702 axial verschiebt. Mittels der Steuereinrichtung 5 wird die Lage des Ventil-Schiebeverbunds zum Öffnen der Ventile 4, 75 definiert und beibehalten. Dieser Zustand ist in Fig. 1B dargestellt. Zum Schließen der Ventile 4, 75 wird der Ventil-Schiebeverbund durch umgekehrte Drehverstellung der Steuerhülse 51 und unter der Kraft der Druckkrafteinrichtung 76 wieder in die Position gemäß Fig. 1A zurückgesetzt.

An dem ersten Gehäuseende 611 des Aufnahmeteilgehäuses 61 ist eine Schutzmanschette 613 angebracht. Zwischen den Teilen der Ventile 4, 75 und den anderen Teilen der beiden Kupplungshälften sind jeweils übliche Dichtungselemente angeordnet.

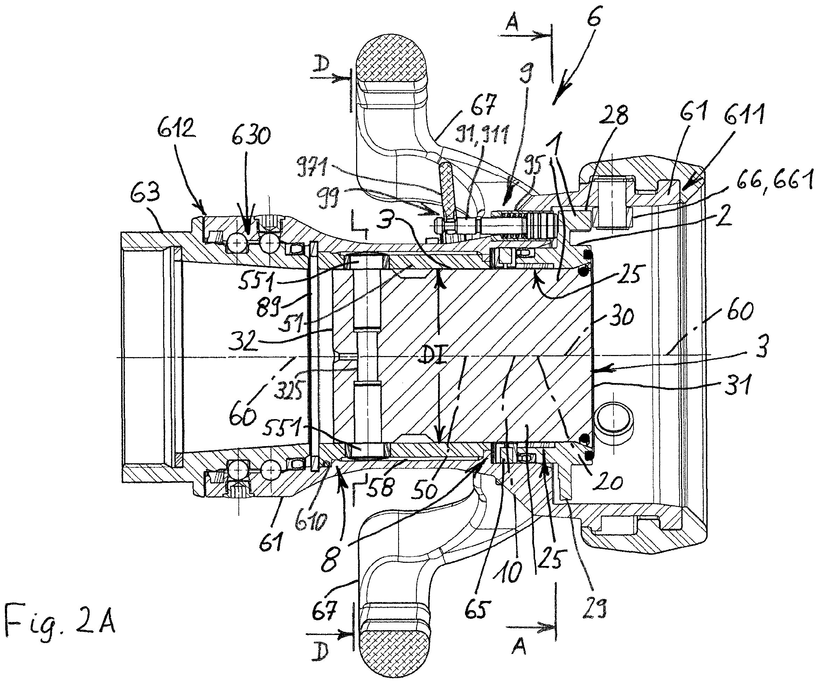

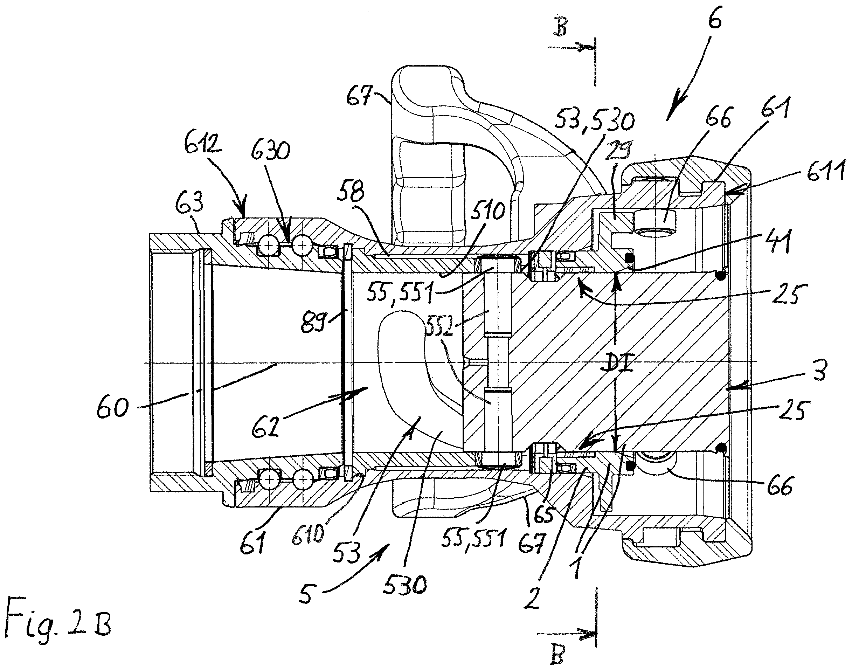

Anhand der Fig. 2A und 2B ist das Trockenkupplungs-Aufnahmeteil 6 detaillierter dargestellt. In Fig. 2A befindet sich das Aufnahmeteil-Ventil 4 in geschlossenem Zustand 401, während in Fig. 2B die Öffnungsposition 402 dargestellt ist. Das Aufnahmeteil 6 setzt sich allgemein modular aus dem Aufnahmeteilgehäuse 61, der Steuerhülse 51 und der Ventil-Baueinheit 1 zusammen.

Stirnseitige Seiten, Enden und Bereiche von sich axial erstreckenden Bauelementen, die der Kuppelseite des Trockenkupplungs-Aufnahmeteils 6 zugewandt sind oder im Bereich der Kuppelseite liegen, werden mit "vorderseitig" oder "Vorderseite" beschrieben, während entgegengesetzt liegende Enden, Seiten oder Bereiche mit "rückseitig" oder "Rückseite" bezeichnet werden.

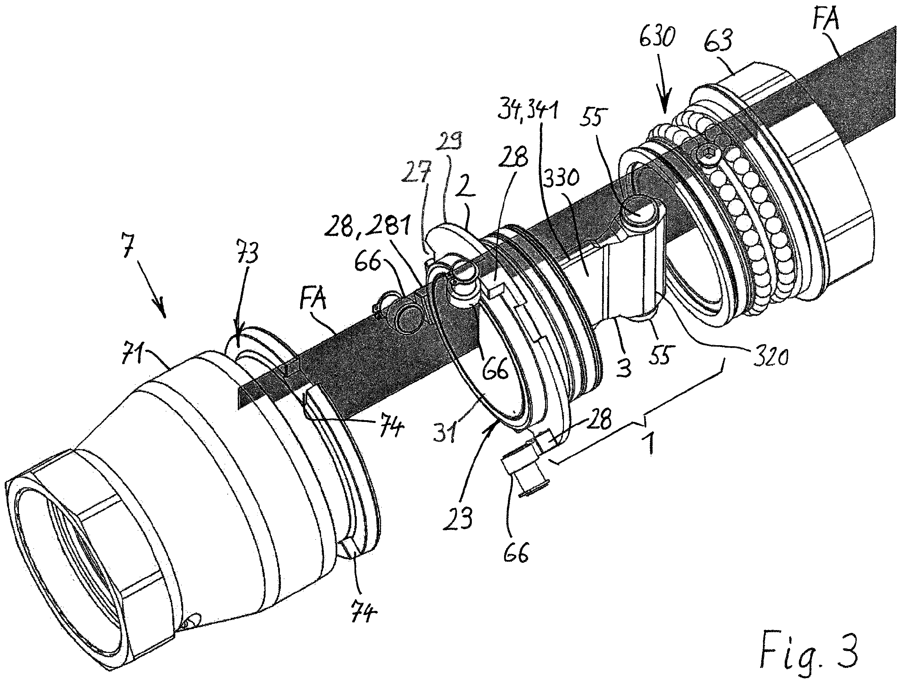

Das Aufnahmeteilgehäuse 61 bildet allgemein ein Druckgehäuse mit Anschluss-/Verbindungselementen zum Kuppeln. Das erste (vordere) Gehäuseende 611 an der Vorderseite des Aufnahmeteilgehäuses 61 ist zum Kuppeln mit dem Trockenkupplungs-Steckteil 7 eingerichtet. Ein zweites (hinteres) Gehäuseende 612 an der Stirnrückseite des Aufnahmeteilgehäuses 61 ist zur Verbindung mit einem nicht dargestellten Leitungs- oder Schlauchelement eingerichtet. Im Ausführungsbeispiel ist das Aufnahmeteilgehäuse 61 mit einem Drehgelenkteil 63 bestückt, das an dem rückseitigen Gehäuseende 612 mittels eines Kugellager-Drehgelenks 630 um die Aufnahmeteilachse 60 drehbar gelagert und zum Anschluss an eine Leitung eingerichtet ist. An dem vorderen Gehäuseende 611 sind innenliegend Anschlusselemente 66, nämlich Anschluss- oder Trennrollen 661 angeordnet, die zum Verbinden mit dem Kupplungs-Steckteil 7 in das Anschlusselement 73, nämlich in eine umlaufende Anschlussnut des Steckteils 7 setzbar sind. Ein Flanschrand des Steckteils 7 weist Anschlussausnehmungen 74 auf, durch die die Anschlusselemente 66 zum Kuppeln und Entkuppeln hindurchgesetzt und im Kupplungszustand durch die Drehverstellung des Aufnahmeteilgehäuses 61 in der Anschlussnut gefangen werden. Positionierung und Zuordnung gehen insbesondere aus Fig. 3 hervor.

Im Ausführungsbeispiel ist die Steuerhülse 51 der Steuereinrichtung 5 ein separates Bauteil, das keinen Bestandteil eines Druckgehäuses bildet. Die Steuerhülse 51 weist einen Hülsen-Außendurchmesser auf, der einem Innendurchmesser des Aufnahmeteilgehäuses 61 entspricht, derart, dass zwischen dem Aufnahmeteilgehäuse 61 und der Steuerhülse 51 ein Umfangsspalt 58 bleibt, der sicherstellt, dass die Steuerhülse 51 frei oder leichtgängig in das Aufnahmeteilgehäuse 61 setzbar ist. Die Steuerhülse 51 ist konzentrisch in das Aufnahmeteilgehäuse 61 eingesetzt, wobei sie, wie aus Fig. 2A und 2B ersichtlich, an dem rückseitigen Gehäuseende 612 in das Aufnahmeteilgehäuse 61 einführbar ist. Es ist eine schraub-, klemm-, stift- und pressfreie Steck- und Formschlussverbindung 8 ausgebildet, die die Steuerhülse 51 an dem Aufnahmeteilgehäuse 61 präzise zentrisch lagert, die mit dem Aufnahmeteilgehäuse 61 drehfeste, mit definiertem Drehversatz eingerichtete Verbindung herstellt und die Steuerhülse 51 an ihren beiden Stirnenden in Richtung zum kuppelseitigen Gehäuseende 611 gegen Radialanschläge axial lagert. Die Steuerhülse 51 ist an ihrer Rückseite mittels eines Sicherungselements 89 in Form eines an der Innenwand 610 des Aufnahmeteilgehäuses 61 gelagerten Sicherungsrings festgesetzt, der einfach anzubringen und zu entfernen ist. Die Erfindung ist auf diese Verbindung nicht beschränkt. Die Steuerhülse und das Aufnahmeteilgehäuse können zum Beispiel auch mit anderen Mitteln drehfest verbunden oder zu einem einstückigen Körper vereinigt sein.

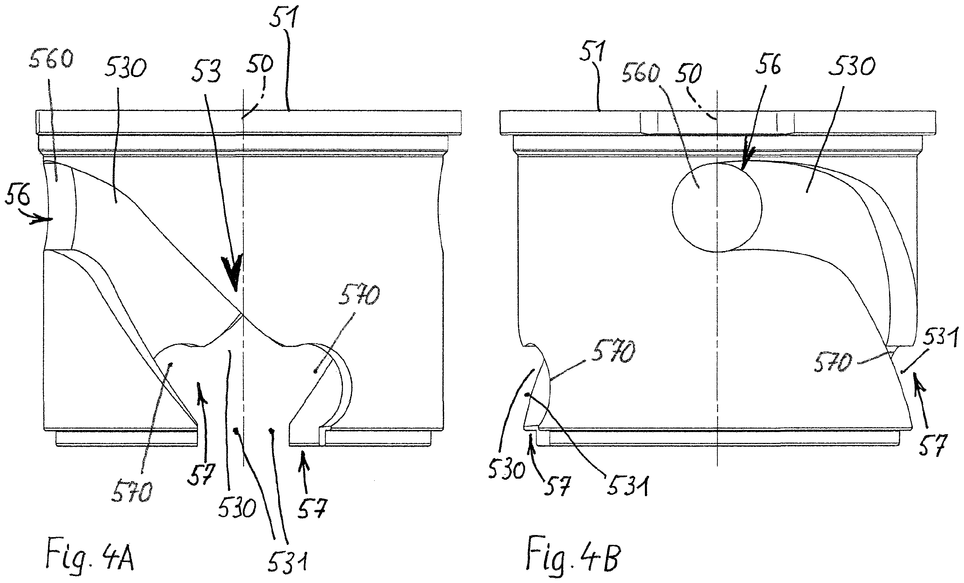

Das Maß der Drehverstellung der gemeinsam mit dem Aufnahmeteilgehäuse 61 um die Aufnahmeteilachse 60 drehbaren Steuerhülse 51 sowie des damit bewirkten translatorischen Hubs des Ventilkörpers 3 werden durch eine Führungskulisse 53 mit zwei Steuerkurven 530 bestimmt. Wie aus Fig. 4A, 4B ersichtlich, sind die beiden Steuerkurven 530 im Umfangsabstand von 180° versetzt angeordnet, wobei sie sich in gleicher Form und Ausrichtung von einem geschlossenen inneren Steuerkurvenende 56 helixförmig zu einem offenen äußeren Steuerkurvenende 57 hin erstrecken. Die offenen äußeren Steuerkurvenenden 57 sind an der dem ersten Gehäuseende 611 zugewandten Vorderseite der Steuerhülse 51 mit axialen Kulissenöffnungen 531 axial offen. Die axiale Länge der Steuerhülse 51 ist derart bemessen, dass an der Vorderseite der Steuerhülse 51 ein Führungs-Sitzring 2 unter Zwischenschaltung eines Sitzring-Federelements 65 anschließt und in dem Aufnahmeteilgehäuse 61 Platz findet. Der Führungs-Sitzring 2 und die Steuerhülse 51 bilden die Innenwandung eines Fluid-Durchgangsraums 62. Eine Innenwand 510 der Steuerhülse 51 und eine Sitzring-Innenwand 21 weisen vorteilhaft einen gemeinsamen Innendurchmesser DI auf.

Die Steuereinrichtung 5 weist weiterhin Steuerelemente 55 auf, zum Beispiel in Form von durch Steuerrollen 551 gebildeten Steuerköpfen, die allgemein an einem rückwärtigen Teil des Ventilkörpers 3 angeordnet sind und in die Steuerkurven 530 einfassen. Zweckmäßig bildet die Führungskulisse 53 eine Führung, die den maximalen Hub des Ventilkörpers 3 infolge einer Drehverstellung der Steuerhülse 51 von mindestens 90°, vorzugsweise von 100°bis etwa 120°bewirkt. Im Ausführungsbeispiel sind Steuerrollen 551 an radiale Enden eines Fußquerelements 320 des Ventilfußes 32 ansetzbar. In das Fußquerelement 320 ist eine radiale Durchgangsbohrung 325 eingebracht, die zum Lagern von Lagerbolzen 552 der Steuerrollen 551 eingerichtet ist. Die Rollen-Lagerbolzen 552 sind lösbar in um 180° gegenüberliegenden Lagerlöcher der Durchgangsbohrung 325 einsetzbar.

Der Ventilkörper 3, die Steuerhülse 51 und der Führungs-Sitzring 2 weisen zugehörige zentrale Körperachsen 30, 50 und 20 auf, die koaxial mit der Aufnahmeteilachse 60 sind. Das Aufnahmeteilgehäuse 61, die Steuerhülse 51, der Führungs-Sitzring 2 und der Ventilkopf 31 sind Zylinderteile oder Abschnitte mit kreisförmigen Querschnitten.

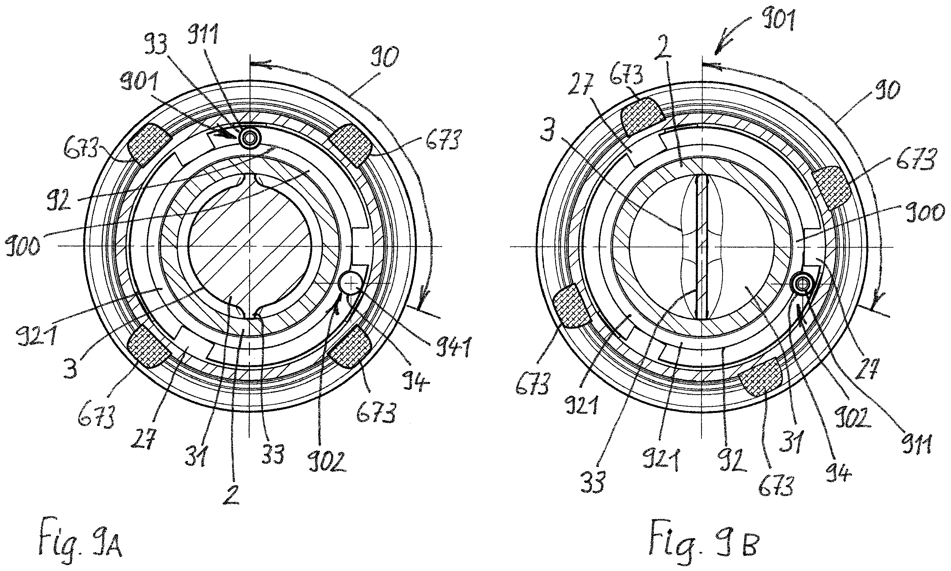

Wie insbesondere aus Fig. 3 ersichtlich, sind an dem Sitzringende 23 mit Umfangsabstand von 120° drei stirnseitig vorspringende Anschlusselemente 28 in Form von Nocken ausgebildet, denen die drei Gehäuse-Anschlusselemente 66 zugeordnet sind. Die Anschlusselemente 28 sind an einem vorderseitigen umlaufenden Außenrand 29 des Führungs-Sitzrings 2 ausgebildet. Die Zuordnung und Anordnung ist derart, dass die Sitzring-Anschlusselemente 28 und die Gehäuse-Anschlusselemente 66 zum Kuppeln und Trennen der Kupplungshälften axial miteinander fluchten. In Fig. 3 ist nur eine Flucht-Axialebene FA dargestellt. Man erkennt, dass die Sitzring-Anschlusselemente 28 in die Steckteil-Anschlussausnehmungen 74 einfassen, wenn die Kupplungshälften aneinander gekuppelt sind. Dadurch ist der Führungs-Sitzring 2 zum Kuppeln und während des Kuppelns in eine Sperrposition setzbar, die relative Drehung zwischen dem Führungs-Sitzring 2 und dem Steckteilgehäuse 71 sperrt. Bei festgehaltenem Führungs-Sitzring 2 ist das Aufnahmeteilgehäuse 61 zum Kuppeln, Entkuppeln und axialen, translatorischen Verlagern des Ventilkörpers 3 zwischen einer Anfangsposition und einer Endposition um den Führungs-Sitzring 2 drehbar, wie dies insbesondere anhand der Fig. 1A, 1B und 9B noch näher beschrieben wird.

Mit allgemein einer definierten Drehversatz-Winkelposition zwischen dem Aufnahmeteilgehäuse 61 und der Steuerhülse 51 sind der Ventil-Schließposition 401 zugeordnete Kuppel-Anschlusspositionen (Anfangspositionen) der Anschlusselemente 28, 66 sowie der Ventil-Öffnungsposition 402 zugeordnete Endpositionen der Steuerelemente 55 in der Führungskulisse 53 eingerichtet und bestimmt. Im Ausführungsbeispiel bilden die Anschlusselemente 28, 66 in ihren Kuppel-Anschlusspositionen drei Anschlusspaare, in denen die Anschlusselemente 28, 66 axial miteinander fluchten (Fig. 3). Wie insbesondere aus Fig. 1A, 2A ersichtlich, wird der Führungs-Sitzring 2 im Aufnahmeteilgehäuse 61 zwischen den Anschlusselementen 66 und dem Sitzring-Federelement 65 gefangen gehalten. Der definierte Drehversatz zwischen dem Aufnahmeteilgehäuse 61 und der Steuerhülse 51 ist so gewählt, dass die Steuerelemente 55 zugehörig zu den Kuppel-Anschlusspositionen zum Kuppeln und Entkuppeln der beiden Kupplungshälften der Trockenkupplung 100 in Steuerkurven-Raststellen 560 an den inneren Steuerkurvenenden 56 einfassen. Die in Fig. 3 zu sehenden Steuerelemente 55 befinden sich in dieser Position. Die Steuerhülse 51 ist in Fig. 3 nicht dargestellt.

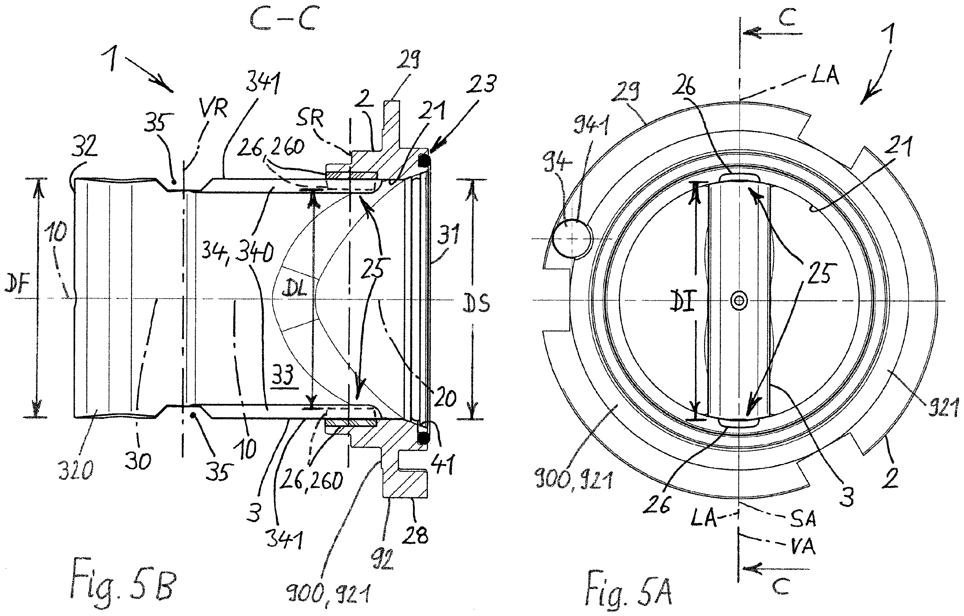

Die Ventileinrichtung 1, wie sie in Fig. 5A, 5B dargestellt ist, ist ein vorgefertigtes Bauteil. Die Ventileinrichtung 1 umfasst allgemein den Führungs-Sitzring 2 mit der Sitzring-Innenwand 21 und den Ventilkörper 3. Der Ventilkörper 3 umfasst den Ventilkopf 31, einen Ventilfuß 32 sowie einen Ventilstegteil 33, der den Ventilkopf 31 und den Ventilfuß 32 miteinander verbindet und axial beabstandet. Ein Führungs-Radiallager 25 lagert den Ventilstegteil 33 an der Sitzring-Innenwand 21 derart, dass der Ventilkörper 3 entlang einer zentralen Körperachse 10 der Ventil-Baueinheit 1 zur translatorischen Verstellbewegung axial gleitbewegbar ist. An einem ersten, vorderen Sitzringende 23 ist der Ventilsitz 41 ausgebildet. Korrespondierende Lagerelemente 26, 34 sind durch Lagerelementpaare gebildet, die jeweils an der Sitzring-Innenwand 21 ein nasenförmiges Lagerelement 260 mit U-förmiger Ausnehmung und an dem Ventilstegteil 33 ein schienenförmiges Lagerelement 340 aufweisen. Die beiden Lagerelement-Paare sind im Umfangsabstand von 180° angeordnet. In einer zu einem Lagersitz gehörenden Lagersitz-Lagerebene LA fallen eine axiale Sitzring-Lagerebene SA, in der die nasenförmigen Lagerelemente 260 liegen, und eine axiale Ventilkörper-Lagerebene VA, in der die schienenförmigen Lagerelemente 340 liegen, zusammen. Das Fußquerelement 320 ist wie das Ventilstegteil 33 in der Lagersitz-Lagerebene LA der schienenförmigen Lagerelemente 340 angeordnet und ausgerichtet und weist einen Fuß-Querdurchmesser DF auf, der größer als ein Lagerinnendurchmesser DL ist, der durch den radialen, diagonalen freien Abstand der ersten Lagerelemente 260 bestimmt ist. Im Ausführungsbeispiel ist auch ein radialer Querdurchmesser DS des Ventilstegteils 33 gleich dem Fuß-Querdurchmesser DF.

Die Ventil-Baueinheit 1 wird zur Montage mit an den Ventilfuß 32 angesetzten Steuerelementen 55 in das Aufnahmeteilgehäuse 61 eingesetzt, wobei die Steuer-elemente 55 in Axialrichtung in die axialen Kulissenöffnungen 531 einführbar sind. Bei diesem Vorgang muss der Außenrand 29 des Führungs-Sitzrings 2 die Gehäuse-Anschlusselemente 66 passieren. Dies gelingt im Ausführungsbeispiel dadurch, dass in den Außenrand 29 drei Randausnehmungen 27 eingebracht sind, die den Sitzring-Anschlusselementen 28 zugeordnet sind. Die Randausnehmungen 27 befinden sich von den Anschlusselementen 28 in einem Umfangsabstand, der dem Umfangsabstand der axialen Kulissenöffnungen 531 von den Steuerkurven-Raststellen 570 entspricht.

Wie aus den Fig. 3, 5A und 5B hervorgeht, ist eine Schlüsselverbindung des Führungs-Radiallagers 25 zwischen den nasenförmigen Lagerelementen 260 und den schienenförmigen Lagerelementen 340 eingerichtet. Montageausnehmungen 35 sind zur Montage und Demontage der Ventil-Baueinheit 1 durch relative Drehverstellung und Axialverstellung zwischen dem Führungs-Sitzring 2 und dem Ventilkörper 3 mit den zugehörigen nasenförmigen, allgemein formgleichen Lagerelementen 260 in deckungsgleiche freie Montagepositionen setzbar. In diesen Positionen fallen eine Radialebene SR, in der die ersten Lagerelemente 26 liegen, und eine Radialebene VR, in der sich die Montageausnehmungen 35 befinden, zusammen. Die Dimensionierung des Ventilstegteils 33 ist so, dass der axiale Hub, der zum Öffnen des Aufnahmeteil-Ventils 4 vorgesehen wird, kleiner ist als der maximale Abstand zwischen den Radialebenen SR, VR (Fig. 5B). Auf dem Weg über die Montagepositionen sind die nasenförmigen Lagerelemente 260 mit den U-förmigen Ausnehmungen und die schienenförmigen Lagerelemente 340 axial in eine Lager-Überlappungsverbindung setzbar bzw. aus dieser herausführbar.

Das Trockenkupplungs-Aufnahmeteil 6 ist mit einer erfindungsgemäßen Verriegelungseinrichtung 9 ausgestattet, mit der der Führungs-Sitzring 2 an dem Aufnahmeteilgehäuse 61 in einer Drehposition festgesetzt wird, in der das Aufnahmeteil-Ventil 4 geöffnet ist. Diese Öffnungs-Drehposition geht aus der Schnittansicht gemäß Fig. 1B und 2B hervor.

Die Verriegelungseinrichtung 9 umfasst ein an dem Aufnahmeteilgehäuse 61 gelagertes Verriegelungs-Rastelement 91 in Form eines Rastbolzens oder Raststiftes 911, wie dies in den Fig. 1A, 2A, Fig. 6A, 6B, Fig. 7A, 7B und Fig. 8 dargestellt ist. An dem Aufnahmeteilgehäuse 61 ist ein Gleitlager 95 angeordnet. Ein Lagergehäuse 951 weist eine Gleitlagerbuchse 952 auf, die den Verriegelungs-Raststift 911 parallel zur Aufnahmeteilachse 60 hin und her schiebebewegbar lagert. Das Lagergehäuse 951 bildet zudem ein Federkammergehäuse einer Druckkrafteinrichtung 96 mit einer Druckfeder 961, die das Rastelement 91 mit Druckkraft beaufschlagt. Der Raststift 911 weist einen Rastelementfuß 93 mit einer unterseitigen Fußkontaktfläche 930 und einen Rastelementkopf 913 auf. Die Druckkrafteinrichtung 96 drückt die Fußkontaktfläche 930 unter Rückstellkraft gegen eine Führungs-Lauffläche 900 eines radialen Führungsrandes 92, der an dem Sitzring-Außenrand 29 ausgebildet ist. Die Führungs-Lauffläche 900 ist eine der Vorderseite des Führungs-Sitzrings 2 abgewandte radiale Stirnfläche, die entlang eines Umfangs-Laufweges 90 durch einen kreisförmigen Ringabschnitt gebildet ist (Fig. 9A, 9B). Die Führungs-Lauffläche 900 ist plan und senkrecht zu der Aufnahmeteilachse 60 gerichtet. Zweckmäßig ist der Führungsrand 92 mit einer Stirnfläche 921, die in einem Abschnitt die Lauffläche 900 bildet, umlaufend an dem Führungs-Sitzring 2 ausgebildet. Die Fußkontaktfläche 930 ist zumindest im Wesentlichen parallelflächig mit der Führungs-Lauffläche 900.

Im Ausführungsbeispiel ist der Raststift 911 zwischen einer ersten Position, nämlich einer Anfangsposition 901 des Umfangs-Laufweges, und einer zweiten Position, nämlich einer Endposition des Umfangs-Laufweges 90, bewegbar. In Fig. 9A befindet sich der Raststift 911 in der Ausgangs-/Anfangsposition 901, die dadurch definiert ist, dass die Steuerelemente 55 in die Steuerkurven-Raststellen 560 an den inneren Steuerkurvenenden 56 rastend einfassen, also durch die Position des Ventilkörpers 3, in der das Aufnahmeteil-Ventil 4 geschlossen ist und sich das Aufnahmeteil 6 im Zustand zum Kuppeln bzw. Entkuppeln befindet.

Der Laufweg des Raststiftes 911 beträgt ca. 110°. Die zweite Raststiftposition an der Verriegelungsposition 902 am Ende des Laufweges 90 ist aus Fig. 9B ersichtlich. Der Drehwinkel bzw. die Länge des Laufweges 90 von der Anfangsposition 901 bis zu der Verriegelungsposition 902 ist durch die Drehverstellung bestimmt, die die Steuerhülse 51 zwischen der genannten Kuppel-/Entkuppel-Position (geschlossenes Aufnahmeteil-Ventil 4) und einer definierten Öffnungsposition des Aufnahmeteil-Ventils 4 erfährt. Die Ventil-Öffnungsposition ist im Ausführungsbeispiel dadurch definiert, dass die Steuerelemente 55 in die Raststellen 570 der Steuerkurven 530 einfassen.

Zum Verriegeln an der Verriegelungsposition 902 sind der Rastelementfuß 912 und eine dem Ende des Laufwegs zugeordnete Verriegelungs-Raststelle 94 besonders gestaltet und aufeinander angepasst. Die Raststelle 94 ist durch eine Rastausnehmung 941 gebildet, die achsparallel in den Führungsrand 92 eingebracht und durch ein kreiszylinderförmiges Loch mit Boden gebildet ist. Der Rastelementfuß 93 ist mit seiner Fußkontaktfläche 930 so geformt, dass er komplementär, allseitig formgleich im Formschluss in der Rastausnehmung 941 sitzt. Aus dem Verriegelungssitz wird der Rastelementfuß 93 durch lineares Verlagern des Raststiftes 911 gegen die Druck-/Rückstellkraft befreit. Die unter Druck-/Rückstellkraft stehende Anlage des Raststiftes 911 gegen die Lauffläche 900 definiert außerhalb der Verriegelungs-Raststelle 94 eine Löseposition des Raststiftes 911.

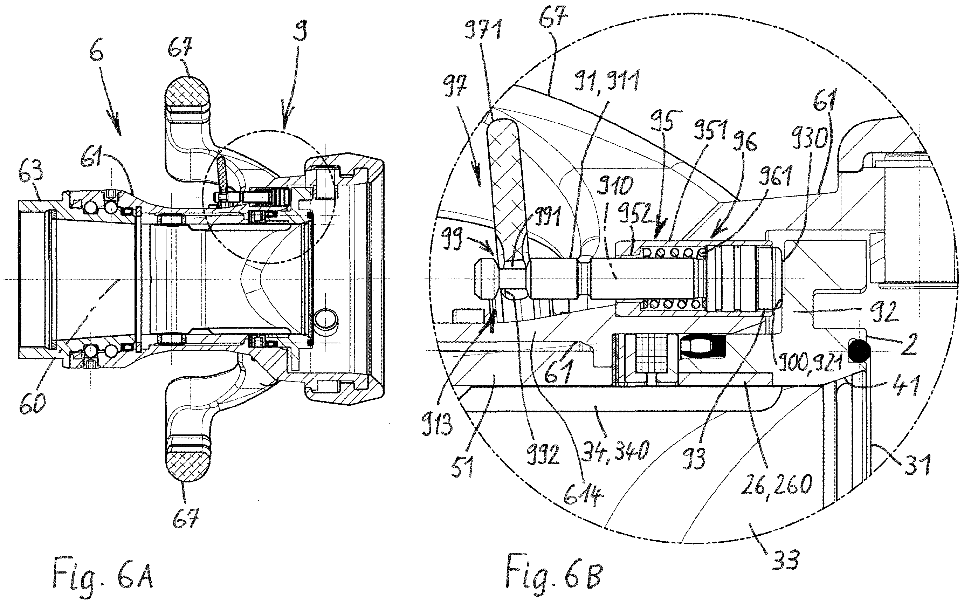

Eine besonders vorteilhafte Maßnahme besteht, wie im Ausführungsbeispiel dargestellt, darin, dass der Rastelementfuß 93 auf dem Laufweg zwischen der Position 901 und der Position 902 in Drehbewegung um seine Stiftachse 910 versetzbar ist. Der Raststift 911 ist mittels des Gleitlagers 95 um seine Stiftachse 910 drehbewegbar gelagert. Die Führungs-Lauffläche 900 des Führungsrands 92 ist so ausgebildet und dimensioniert, dass sie nur einen Randbereich der Fußkontaktfläche 930 berührt. Dieser Kontakt des Rastelementfußes 93 im Bereich zwischen der Stiftachse 910 ist und dem der Aufnahmeteilachse 60 nächsten Fußrand des Verriegelungs-Raststiftes 911 ist insbesondere in Fig. 6B und 9A, 9B dargestellt. Die Kontaktfläche 930 des Rastelementfußes 93 gelangt maximal hälftig zur Anlage an die Führungs-Lauffläche 900. Es resultiert, dass der Raststift 911 um seine Stiftachse 910 gedreht wird, wenn er sich auf dem Laufweg 90 zwischen den Positionen 901 und 902 bewegt. Die Fußkontaktfläche 930 liegt in jeder Drehposition des Raststiftes 911 unter der Druckkraft gleichmäßig gegen die Führungs-Lauffläche 900 an.

Erfindungsgemäß ist eine besondere Betätigungseinrichtung 97 zum Betätigen des Raststiftes 911 ausgebildet. Die Betätigungseinrichtung 97 umfasst ein Betätigungselement in Form eines einarmigen Betätigungshebels 971, der mittels eines Schwenklagers 98 um eine Hebel-Schwenkachse 980, die senkrecht zur Aufnahmeteilachse 60 gerichtet ist, einarmig angelenkt ist. Vorteilhaft erstreckt sich ein freies Ende des Betätigungshebels 971 im Bereich eines an dem Aufnahmeteilgehäuse 61 angeordneten Gehäuse-Handgriffs 67.

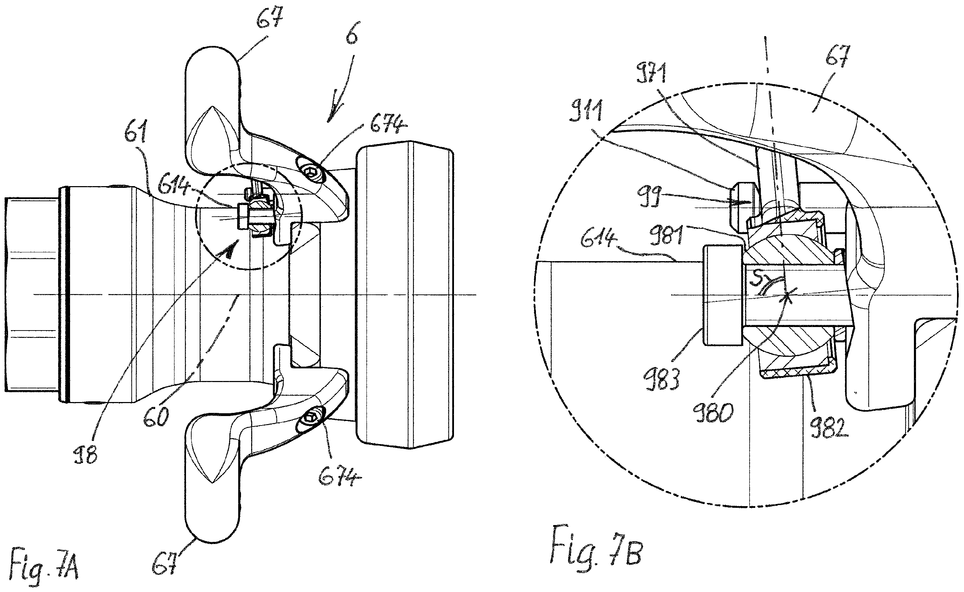

Zwischen der Hebel-Schwenkachse 980 und einem zum Betätigen freien Ende des Betätigungshebels 971 ist eine Mitnehmer-Verbindung 99 derart ausgebildet, dass sich das Rastelement 91 in Abhängigkeit von Schwenkstellungen des Betätigungshebels 971 in der Löseposition und in der Verriegelungsposition 902 befindet. Im Bereich des Rastelementkopfes 913 weist der Raststift 911 eine Mitnehmernut 991 auf, in die der Mitnehmerrand 992 eines Langlochs einfasst, das an dem Betätigungselement 971 in der Nähe des Schwenklagers 98 ausgebildet ist (Fig. 7B). Das heißt, dass die Mitnehmer-Verbindung 99 mit einem kurzen Hebelabschnitt von der Hebel-Schwenkachse 980 beabstandet ist. Hingegen befindet sich das freie Hebelende zum Betätigen des einarmigen Hebels 971 in relativ großem Abstand von der Mitnehmer-Verbindung 99. Jede Mitnehmer-Verbindung kann vorgesehen werden, die die Bewegungen zwischen dem Betätigungshebel 971 und dem Verriegelungs-Raststift 911 umsetzt.

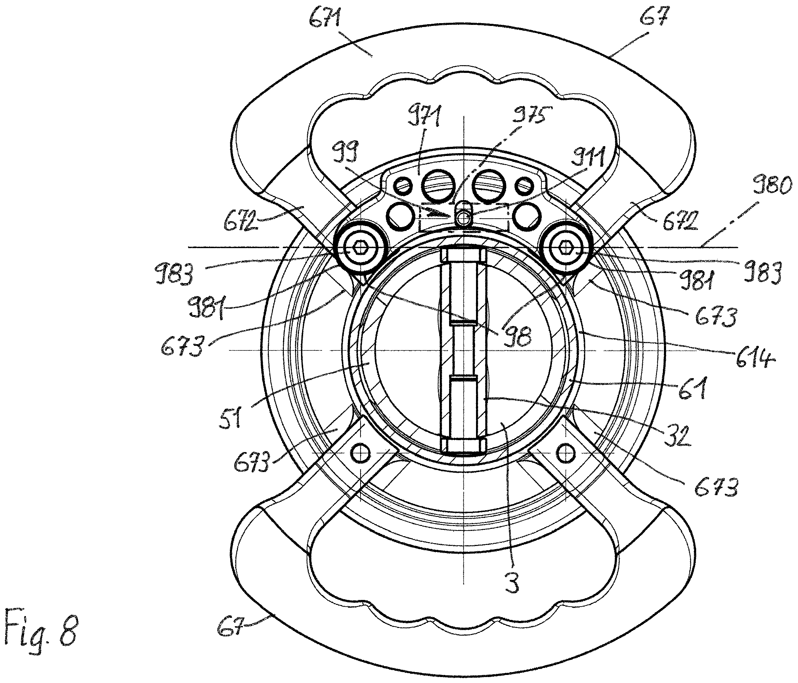

Eine in Fig. 7B und 8 näher dargestellte besondere Ausbildung besteht darin, dass das Schwenklager 98 zwei Lagerkugeln 981 aufweist, wobei der Betätigungshebel 971 in Form einer Handhabungs-Platte im Bereich seitlicher Plattenränder am Lagerende mittels Lagerschalen 982 an die Lagerkugeln 981 angelenkt ist. Die Lagerkugeln 981 sind mittels Schraubverbindung 983 an inneren Befestigungsenden von radialen Griffarmen 672 des Gehäuse-Handgriffs 67 befestigt. Die inneren Griffarmenden sind mit Schraubverbindung 674 an Gehäusekonsolen 673 unterhalb eines Zenits einer Wand 614 des Aufnahmeteilgehäuses befestigt (Fig. 8, 9A, 9B). Wie insbesondere aus Fig. 8, 9A, 9B ersichtlich, schneidet die Schwenkachse 980 sekantenartig den Querschnitt des Aufnahmeteilgehäuses 61 im kleinsten Durchmesserbereich dieses Gehäuses. Allgemein ist die Schwenkachse 980 im Querschnitt des Aufnahmeteilgehäuses besonders tief bis in den Querschnittsbereich der Steuerhülse 51 gelegt. Zudem ist die Mitnehmer-Verbindung 99 von dem Schwenklager 98 im Wesentlichen nur mit einer Dimension dieses Lagers, im Ausführungsbeispiel etwa mit dem halben Durchmesser der Lagerkugeln 981 bzw. der Lagerschalen 982 beabstandet. Die Griffarmenden sind im Bereich des Führungs-Sitzrings 2 an dem Aufnahmeteilgehäuse 61 befestigt. Die Betätigungsplatte ist mit einem inneren konkaven Rand an die Außenkontur des Aufnahmeteilgehäuses zwischen den Lagerschalen 982 angepasst.

Die Betätigungsplatte bildet eine Art Schaltlasche, die sich in mittiger Anordnung im Bereich des Durchgriffs des Gehäuse-Handgriffs 67 unter dem Bügelsteg 671 erstreckt, wie dies insbesondere aus Fig. 8 ersichtlich ist. Der Betätigungshebel 971 in Form der plattenartigen Handhabe erstreckt sich mit dem Bügelsteg 671, so dass er im Zugriffsbereich der Finger einer den Gehäuse-Handgriff 67 erfassenden Hand liegt und nach Art einer Lenkradschaltung angeordnet und bedienbar ist. Allgemein ist der Betätigungshebel 971 steil zur Aufnahmeteilachse 60 ausgerichtet. Im Ausführungsbeispiel gemäß Fig. 7A, 7B beträgt der Winkel S zwischen der Aufnahmeteilachse 60 und dem Betätigungshebel 971 nahezu 90°. Diese Hebelposition gehört zu den in Fig. 8 und 9A dargestellten Anfangspositionen 901 des Verriegelungs-Raststifts 911. In der Position der Verriegelung (Fig. 9B) ist der Winkel S 90° oder etwas größer.

Die Verriegelungseinrichtung 9 wird durch die Schwenkbewegung des Betätigungshebels 971 um die Schwenkachse 980 auf einfache Weise betätigt und geschaltet. In der Anfangsposition 901 und während der Bewegung entlang des Laufweges 90 liegt die Fußkontaktfläche 930 an der Führungs-Lauffläche 900 an, und der Rastelementfuß 93 gelangt an der Verriegelungs-Raststelle 94 in die Verriegelungsposition 902. Diese Rast-/Verriegelungsposition wird durch eine Bedienperson beim Erreichen deutlich wahrgenommen, und zudem wird der Kupplungszustand in der Öffnungsposition des Aufnahmeteil-Ventils 4 gesichert. Diese Sicherung erfolgt zusätzlich zu der Rastsicherung, die durch den Rastsitz der Steuerelemente 55 in den Steuerkurven-Raststellen 570 hergestellt ist.

Zum Schließen des Aufnahmeteil-Ventils 4 bzw. zum Entkuppeln lässt sich der Raststift 911 mittels des schwenk-/kippbaren Betätigungshebels 971 gegen die Rückstellkraft bequem aus dem Formschluss in der Verriegelungs-Rastausnehmung 941 befreien und in der Löseposition über den beschriebenen Laufweg in die Position 901 bringen.

Die Position 901, die die Ausgangsposition zum Kuppeln oder Entkuppeln mit geschlossenem Aufnahmeteil-Ventil 4 repräsentiert, kann im Bedarfsfall mit einer Verriegelungs-Raststelle ausgebildet werden, die der beschriebenen Verriegelungs-Raststelle 94 entspricht. Im Übrigen können die oder mehrere Raststellen andere gewünschte Laufwege oder wenigstens eine Zwischenposition an einem Laufweg des Verriegelungs-Rastelements 91 definieren und mit der erfindungsgemäßen Verriegelung vorgesehen werden.

In Fig. 8 ist nur strichpunktiert ein an dem Aufnahmeteilgehäuse 61 angeordnetes Stellglied 975 dargestellt, das allgemein mit dem Verriegelungs-Rastelement 91 zum Sperren und Freigeben der Axialbewegung des Rastelements 91 eingerichtet und mit elektrischer Signalsteuerung in diese Betriebszustände setzbar ist. Dieses oder ein anderes elektrisch steuerbares Stellglied kann auch so eingerichtet werden, dass das Verriegelungs-Rastelement durch axiale Verstellbewegung mittels des Stellgliedes entriegelt wird.

## Patentansprüche

1. Trockenkupplungs-Aufnahmeteil (6) einer Fluid-Trockenkupplung (100), umfassend
**(i)** ein sich entlang einer zentralen Aufnahmeteilachse (60) axial erstreckendes rohrförmiges Aufnahmeteilgehäuse (61) mit einem ersten Gehäuseende (611) zum Kuppeln mit einem Trockenkupplungs-Steckteil (7) der Trockenkupplung (100) sowie mit einem zweiten Gehäuseende (612) zur Verbindung mit einem Leitungselement;
**(ii)** eine in dem Aufnahmeteilgehäuse (61) angeordnete Aufnahmeteil-Ventileinrichtung (1), gebildet durch einen Führungs-Sitzring (2) mit einer Sitzring-Innenwand (21) sowie durch einen den Führungs-Sitzring (2) mit einem Teil durchfassenden, an dem Führungs-Sitzring (2) mittels eines Führungs-Radiallagers (25) radial gelagerten und axial gleitbewegbaren Ventilkörper (3), wobei das Aufnahmeteilgehäuse (61) und der Führungs-Sitzring (2) zum Kuppeln mit dem Trockenkupplungs-Steckteil (7) in Eingriff bringbare Anschlusselemente (28, 66) aufweisen, die zum Herstellen einer drehfesten Verbindung zwischen dem Führungs-Sitzring (2) und dem Trockenkupplungs-Steckteil (7) sowie zum Herstellen einer Drehverbindung zwischen dem Aufnahmeteilgehäuse (61) und dem Trockenkupplungs-Steckteil (7) eingerichtet sind,
- wobei der Ventilkörper (3) einen Ventilkopf (31), einen außerhalb des Führungs-Sitzrings (2) liegenden Ventilfuß (32) sowie einen mittels des Führungs-Radiallagers (25) an der Sitzring-Innenwand (21) gelagerten Ventilstegteil (33) aufweist, der den Ventilkopf (31) und den Ventilfuß (32) miteinander verbindet und axial beabstandet,
- wobei der Führungs-Sitzring (2) an einem ersten Sitzringende (23) einen Ventilsitz (41) aufweist, der zusammen mit dem Ventilkopf (31) ein Aufnahmeteil-Ventil (4) bildet, wobei der Ventilkopf (31) in Ventil-Schließposition (401) dichtend in den Ventilsitz (41) einfasst und in Ventil-Öffnungsposition (402) an dem ersten Sitzringende (23) aus dem Führungs-Sitzring (2) hervortritt, und
- wobei das Aufnahmeteilgehäuse (61) und der Führungs-Sitzring (2) zum Kuppeln und Entkuppeln mit dem Trockenkupplungs-Steckteil (7) relativ zueinander drehbar um die Aufnahmeteilachse (60) angeordnet sind;
(iii) eine Aufnahmeteil-Steuereinrichtung (5), mittels der der Ventilkörper (3) in die Ventil-Öffnungsposition (402) sowie umgekehrt in die Ventil-Schließposition (401) bewegbar ist, umfassend eine um die Aufnahmeteilachse (60) drehbare Steuerhülse (51) mit einer Führungskulisse (53) sowie Steuerelemente (55), die an dem Ventilfuß (32) angeordnet sind und die in die Führungskulisse (53) einfassen, wobei zentrale Körperachsen (30, 50, 20) des Ventilkörpers (3), der Steuerhülse (51) und des Führungs-Sitzrings (2) koaxial mit der Aufnahmeteilachse (60) sind, der Führungs-Sitzring (2) und die Steuerhülse (51) einen den Ventilkörper (3) mit Fluidströmung beaufschlagenden Fluid-Durchgangsraum (62) bilden, der axial bewegbar gelagerte Ventilkörper (3) durch richtungsabhängige Drehung der Steuerhülse (51) und entsprechende Axialverlagerung in die Ventil-Schließposition (401) bzw. die Ventil-Öffnungsposition (402) setzbar ist und das Aufnahmeteilgehäuse (61) und die Steuerhülse (51) zur gemeinsamen Drehung um die Aufnahmeteilachse (60) miteinander vereinigt sind;
**(iv)** eine Verriegelungseinrichtung (9) zur lösbaren drehfesten Verbindung des Aufnahmeteilgehäuses (61) und des Führungs-Sitzrings (2), umfassend (**iv**.**1**) ein Verriegelungs-Rastelement (91), das einen Rastelementfuß (93) mit einer unterseitigen Fußkontaktfläche (930) aufweist, die auf einem kreisförmigen Umfangs-Laufweg (90) von einer Anfangsposition (901) bis zu einer lösbaren definierten Verriegelungsposition (902) unter Druck gegen eine korrespondierende Führungs-Lauffläche (900) anliegt, die an einem an dem Führungs-Sitzring (2) radial hervorstehenden Führungsrand (92) ausgebildet ist und eine der Verriegelungsposition (902) zugeordnete Verriegelungs-Raststelle (94) aufweist, in die der Rastelementfuß (93) in der Verriegelungsposition (902) einrastet, wobei das Rastelement (91) in einem an dem Aufnahmeteilgehäuse (61) angeordneten Gleitlager (95) unter Wirkung der Druckkraft gleitbewegbar gelagert ist, und **(iv.2)** eine Betätigungseinrichtung (97) mit einem Betätigungselement, gebildet durch einen Betätigungshebel (971), der mittels eines Schwenklagers (98) um eine Hebel-Schwenkachse (980) schwenkbar angelenkt ist und mittels einer Mitnehmer-Verbindung (99) mit dem Verriegelungs-Rastelement (91) verbunden ist, wobei sich das Verriegelungs-Rastelement (91) in Abhängigkeit von Schwenkstellungen des Betätigungshebels (971) in einer Löseposition und in wenigstens einer genannten Verriegelungsposition (902) befindet,
**dadurch gekennzeichnet, dass** der Rastelementfuß (93) parallel zur Aufnahmeteilachse (60) gerichtet ist, dass die Führungs-Lauffläche (900) durch eine radiale Stirnfläche des Führungsrandes (92) gebildet ist und dass der Betätigungshebel (971) ein einarmiger Hebel ist, wobei die ihn einarmig anlenkende Hebel-Schwenkachse (980) quer zu der Aufnahmeteilachse (60) gerichtet ist und wobei die Mitnehmer-Verbindung (99) zwischen der Hebel-Schwenkachse (980) und einem zur Betätigung freien Ende des Betätigungshebels (971) angeordnet ist.

2. Aufnahmeteil nach Anspruch 1, **dadurchgekennzeichnet**, dass zwischen der Verriegelungs-Raststelle (94) und dem Rastelementfuß (93) eine Verriegelungs-Formschlussverbindung mit, einschließlich der Fußkontaktfläche (930) des Rastelements (91), formgleichen komplementären Rastflächen ausgebildet ist.

3. Aufnahmeteil nach Anspruch 1 oder 2, **dadurch gekennzeichnet, dass** das Aufnahmeteilgehäuse (61) wenigstens mit einem Teil durch ein Aufnahmeteil-Außengehäuse gebildet ist, an dem das Gleitlager (95) zum Lagern des Rastelements (91) angeordnet ist.

4. Aufnahmeteil nach einem der Ansprüche 1 bis 3, **dadurch gekennzeichnet, dass** das Gleitlager (95) mit einer direkt an dem Rastelement (91) angreifenden Druckkrafteinrichtung (96) zum Ausüben der Druckkraft ausgebildet ist.

5. Aufnahmeteil nach einem der Ansprüche 1 bis 4, **dadurch gekenn** - **zeichnet**, dass die Verriegelungs-Raststelle (94) durch eine Verriegelungs-Rastausnehmung (941) gebildet ist.

6. Aufnahmeteil nach einem der Ansprüche 1 bis 5, **dadurch gekennzeichnet, dass** das Verriegelungs-Rastelement (91) durch einen mit seiner Stiftachse (910) parallel zur Aufnahmeteilachse (60) gelagerten Verriegelungs-Raststift (911) gebildet ist.

7. Aufnahmeteil nach Anspruch 6, **dadurch gekennzeichnet, dass** der Verriegelungs-Raststift (911) um seine Stiftachse (910) drehbar gelagert ist und dass die Führungs-Lauffläche (900) die Fußkontaktfläche (930) nur in einem Teilbereich derart berührt, dass der Verriegelungs-Raststift (911) im Laufkontakt mit der Führungs-Lauffläche (900) in Drehung um seine Stiftachse (910) versetzt wird.

8. Aufnahmeteil nach einem der Ansprüche 1 bis 7, **dadurch gekennzeichnet, dass** die Hebel-Schwenkachse (980) in der Nähe der Wand (614) des Aufnahmeteilgehäuses (61) angeordnet ist.

9. Aufnahmeteil nach Anspruch 8, **dadurch gekennzeichnet, dass** die Hebel-Schwenkachse (980) den Zylinderquerschnitt des Aufnahmeteilgehäuses (61) schneidet.

10. Aufnahmeteil nach einem der Ansprüche 1 bis 9, **dadurch gekennzeichnet, dass** die Mitnehmer-Verbindung (99) mit einem kurzen Hebelabschnitt von der Hebel-Schwenkachse (980) und mit einem langen Hebelabschnitt von dem freien Ende des Betätigungshebels (971) beabstandet ist.

11. Aufnahmeteil nach einem der Ansprüche 1 bis 10, **dadurch gekennzeichnet, dass** das Aufnahmeteilgehäuse (61) mit einem radial von dem Aufnahmeteilgehäuse (61) abstehenden Gehäuse-Handgriff (67) zum Drehen des Aufnahmeteilgehäuses (61) um die Aufnahmeteilachse (60) verbunden ist und dass der Betätigungshebel (971) ein von Hand betätigbares Element ist, das im Zugriffsbereich von wenigstens einem Finger einer den Gehäuse-Handgriff (67) erfassenden Hand angeordnet ist.

12. Aufnahmeteil nach Anspruch 11, **dadurch gekennzeichnet, dass** der Gehäuse-Handgriff (67) ein flügelartiger Griffbügel mit einem Bügelsteg (671) ist und dass der Betätigungshebel (971) zwischen dem Bügelsteg (671) und dem Aufnahmeteilgehäuse (61) angeordnet ist.

13. Aufnahmeteil nach Anspruch 12, **dadurch gekennzeichnet, dass** der Betätigungshebel (971) durch eine Betätigungsplatte gebildet ist, die sich zwischen zwei den Bügelsteg (671) verbindenden Griffarmen (672) erstreckt.

14. Aufnahmeteil nach einem der Ansprüche 1 bis 13, **dadurch gekennzeichnet, dass** das Schwenklager (98) des Betätigungshebels (971) an dem Gehäuse-Handgriff (67) angeordnet ist.

15. Aufnahmeteil nach einem der Ansprüche 1 bis 14, **dadurch gekennzeichnet, dass** das Schwenklager (98) des Betätigungshebels (971) im vorderen Endbereich der Steuerhülse (51) angeordnet ist.

16. Aufnahmeteil nach einem der Ansprüche 1 bis 15, **dadurch gekennzeichnet, dass** die Betätigungseinrichtung (97) ein elektrisch ansteuerbares Stellglied (975) umfasst.

17. Aufnahmeteil nach Anspruch 16, **dadurch gekennzeichnet, dass** das elektrisch ansteuerbare Stellglied das Rastelement (91) in der Verriegelungsposition (902) gesteuert festsetzt.

18. Aufnahmeteil nach einem der Ansprüche 1 bis 17, **dadurch gekennzeichnet, dass** die Führungskulisse (53) der Aufnahmeteil-Steuereinrichtung (5) wenigstens eine Steuerkurve (530) mit einer Steuerkurven-Raststelle (570) aufweist, die der Ventil-Öffnungsposition (402) zugeordnet ist und zu der eine genannte Verriegelungsposition (902) des Verriegelungs-Rastelements (91) gehört.

19. Aufnahmeteil nach einem der Ansprüche 1 bis 18, **dadurch gekennzeichnet, dass** die Führungskulisse (53) der Aufnahmeteil-Steuereinrichtung (5) wenigstens eine Steuerkurven-Raststelle (570) aufweist, die der Verriegelungsposition (902) des Rastelement-Laufweges (90) zugeordnet ist.

20. Aufnahmeteil nach einem der Ansprüche 1 bis 19, **dadurch gekennzeichnet, dass** das Aufnahmeteilgehäuse (61) und die Steuerhülse (51) zwei separate Bauteile sind, die mittels einer Formschlussverbindung (8) drehfest miteinander verbunden sind.

21. Fluid-Trockenkupplung (100), gebildet durch ein Trockenkupplungs-Aufnahmeteil (6) nach einem der Ansprüche 1 bis 20 und ein an das Trockenkupplungs-Aufnahmeteil (6) angeschlossenes Trockenkupplungs-Steckteil (7) mit einer einen Steckteil-Ventilkörper (751) aufweisenden Steckteil-Ventileinrichtung (75), wobei der Ventilkörper (3) des Trockenkupplungs-Aufnahmeteils (6) und der Steckteil-Ventilkörper (751) des Trockenkupplungs-Steckteils (7) in einem axial verlagerbaren Schiebeverbund aneinandersitzen, der gegen Rückstellkraft aus zugehörigen Ventil-Schließpositionen (401, 701) in Ventil-Öffnungspositionen (402, 702) setzbar ist.

22. Trockenkupplung nach Anspruch 21, **dadurch gekennzeichnet, dass** das Trockenkupplungs-Steckteil (7) eine Druckkrafteinrichtung (76) aufweist, die den Steckteil-Ventilkörper (751) mit der Rückstellkraft beaufschlagt.

23. Trockenkupplung nach Anspruch 21 oder 22, **dadurch gekennzeichnet, dass** das Trockenkupplungs-Steckteil (7) eine Umfangs-Anschlussnut (73) aufweist, in die Anschlusselemente (66) des Trockenkupplungs-Aufnahmeteils (6), in Umfangsrichtung rastfrei, eingreifen.

## Claims

1. Dry-coupling receiving part (6) for a dry-coupling for fluid (100), comprising
**(i)** a tubular receiving-part housing (61) extending axially along a central receiving-part axis (60) having a first housing end (611) for coupling with a dry-coupling plug-in part (7) of the dry coupling (100) and having a second housing end (612) for connecting to a pipe element;
**(ii)** a receiving-part valve device (1) arranged in the receiving-part housing (61), formed by a guide seat ring (2) with a seat ring inner wall (21) and by a guide seat ring (2) with a part passing through an axially slidable valve body (3) radially mounted on the guide seat ring (2) by means of a guiding radial bearing (25), wherein the receiving-part housing (61) and the guide seat ring (2) have connecting elements (28, 66) for coupling which can be brought into engagement with the dry-coupling plug-in part (7), said connecting elements being configured to establish a non-rotatable connection between the guide seat ring (2) and the dry-coupling plug-in part (7) as well as to establish a rotary connection between the receiving-part housing (61) and the dry-coupling plug-in part (7),
- wherein the valve body (3) has a valve head (31), a valve base (32) situated outside the guide seat ring (2) and a valve web part (33) mounted by means of the guiding radial bearing (25) on the seat ring inner wall (21), said valve web part joining the valve head (31) and the valve base (32) together and spacing them apart axially,
- wherein the guide seat ring (2) has a valve seat (41) on a first seat ring end (23), which together with the valve head (31) forms a receiving-part valve (4), wherein the valve head (31) engages sealingly in the valve seat (41) in the closing position (401) of the valve and protrudes from the guide seat ring (2) on the first seat ring end (23) in the opening position (402) of the valve, and
- wherein the receiving-part housing (61) and the guide seat ring (2) are arranged rotatably relative to each other about the receiving-part axis (60) for coupling to and uncoupling from the dry-coupling plug-in part (7);
**(iii)** a receiving-part control device (5), by means of which the valve body (3) is movable into the opening position (402) of the valve and conversely into the closing position (401) of the valve, comprising a control sleeve (51) rotatable about the receiving-part axis (60) with a guiding link (53) and control elements (55) which are arranged on the valve base (32) and which engage in the guiding link (53), wherein central body axes (30, 50, 20) of the valve body (3), the control sleeve (51) and the guide seat ring (2) are coaxial with the receiving-part axis (60), the guide seat ring (2) and the control sleeve (51) form a fluid passage space (62) which charges the valve body (3) with fluid flow, and the valve body (3) mounted so as to be axially movable can be placed, due to directionally dependent rotation of the control sleeve (51) and corresponding axial displacement, into the closing position (401) of the valve or the opening position (402) of the valve, and the receiving-part housing (61) and the control sleeve (51) are united with each other for common rotation about the receiving-part axis (60);
**(iv)** a locking device (9) for releasably joining the receiving-part housing (61) and the guide seat ring (2) non-rotatably, comprising **(iv.1)** a locking latching element (91), having a latching element base (93) with a base contact surface (930) on the underside which rests on a circular circumferential path (90) from a starting position (901) up to a releasable defined locking position (902) under pressure against a corresponding guiding running surface (900), said guiding running surface being formed on a guiding edge (92) protruding radially on the guide seat ring (2) and having a locking latching point (94) assigned to the locking position (902), in which the latching element base (93) engages in the locking position (902), wherein the latching element (91) is slidably mounted in a slide bearing (95) arranged on the receiving-part housing (61) under the effect of the compressive force, and **(iv.2)** an operating device (97) having an operating element, formed by an operating lever (971), which is pivotably hinged by means of a pivot bearing (98) about a lever pivot axis (980) and is joined to the locking latching element (91) by means of a pusher dog connection (99), wherein the locking latching element (91), depending on pivot positions of the operating lever (971) is located in a release position and in at least one said locking position (902),
**characterised in that** the latching element base (93) is directed parallel to the receiving-part axis (60), that the guiding running surface (900) is formed by a radial front surface of the guiding edge (92) and that the operating lever (971) is a single-arm lever, wherein the lever pivot axis (980) linking it by a single arm is directed transversely to the receiving-part axis (60) and wherein the pusher dog connection (99) is arranged between the lever pivot axis (980) and a free end of the operating lever (971) for operation.

2. Receiving part according to claim 1, **characterised in that** a locking form-fit connection, including the base contact surface (930) of the latching element (91), is formed with identically shaped complementary latching surfaces between the locking latching point (94) and the latching element base (93).

3. Receiving part according to claim 1 or 2, **characterised in that** the receiving-part housing (61) is formed at least with one part through a receiving-part outer housing on which the slide bearing (95) is arranged for supporting the latching element (91).

4. Receiving part according to any one of claims 1 to 3, **characterised in that** the slide bearing (95) is designed with a pressure force device (96) acting directly on the latching element (91) for exerting the compressive force.

5. Receiving part according to any one of claims 1 to 4, **characterised in that** the locking latching point (94) is formed by a locking latching recess (941).

6. Receiving part according to any one of claims 1 to 5, **characterised in that** the locking latching element (91) is formed by a locking latch pin (911) with its pin axis (910) mounted parallel to the receiving-part axis (60).

7. Receiving part according to claim 6, **characterised in that** the locking latch pin (911) is rotatably supported about its pin axis (910) and that the guiding running surface (900) only touches the base contact surface (930) in a partial area in such a manner that the locking latch pin (911) is set in rotation about its pin axis (910) in running contact with the guiding running surface (900).

8. Receiving part according to any one of claims 1 to 7, **characterised in that** the lever pivot axis (980) is arranged close to the wall (614) of the receiving-part housing (61).

9. Receiving part according to claim 8, **characterised in that** the lever pivot axis (980) intersects the cylinder cross-section of the receiving-part housing (61).

10. Receiving part according to any one of claims 1 to 9, **characterised in that** the pusher dog connection (99) is spaced apart from the lever pivot axis (980) with a short lever portion and from the free end of the operating lever (971) with a long lever portion.

11. Receiving part according to any one of claims 1 to 10, **characterised in that** the receiving-part housing (61) is connected to a housing handle (67) protruding radially from the receiving-part housing (61) for rotating said receiving-part housing (61) about the receiving-part axis (60) and that the operating lever (971) is a manually operable member which is arranged in the access area of at least one finger of a hand grasping the housing handle (67).

12. Receiving part according to claim 11, **characterised in that** the housing handle (67) is a wing-like handle with a handle crossbar (671) and that the operating lever (971) is arranged between the handle crossbar (671) and the receiving-part housing (61).

13. Receiving part according to claim 12, **characterised in that** the operating lever (971) is formed by an operating plate which extends between two handle arms (672) connecting the handle crossbar (671).

14. Receiving part according to any one of claims 1 to 13, **characterised in that** the pivot bearing (98) of the operating lever (971) is arranged on the housing handle (67).

15. Receiving part according to any one of claims 1 to 14, **characterised in that** the pivot bearing (98) of the operating lever (971) is arranged in the front end region of the control sleeve (51).

16. Receiving part according to any one of claims 1 to 15, **characterised in that** the operating device (97) comprises an electrically controllable actuator (975).

17. Receiving part according to claim 16, **characterised in that** the electrically controllable actuator fixes the latching element (91) controlled in the locking position (902).

18. Receiving part according to any one of claims 1 to 17, **characterised in that** the guiding link (53) of the receiving-part control device (5) has at least one control curve (530) with a control curve resting point (570) which is assigned to the opening position of the valve (402) and to which a said locking position (902) of the locking latching element (91) belongs.

19. Receiving part according to any one of claims 1 to 18, **characterised in that** the guiding link (53) of the receiving-part control device (5) has at least one control curve resting point (570) which is assigned to the locking position (902) of the latching element path (90).

20. Receiving part according to any one of claims 1 to 19, **characterised in that** the receiving-part housing (61) and the control sleeve (51) are two separate components which are non-rotatably joined to each other by means of a form-fit connection (8).

21. Dry coupling (100) for fluid, formed by a dry-coupling receiving part (6) according to any one of claims 1 to 20 and a dry-coupling plug-in part (7) connected to the dry-coupling receiving part (6) with a plug-in-part valve device (75) having a plug-in-part valve body (751), wherein the valve body (3) of the dry-coupling receiving part (6) and the plug-in-part valve body (751) of the dry-coupling plug-in part (7) sit against each other in an axially displaceable sliding combination, which can be placed out of associated closing positions (401, 701) of the valve into opening positions (402, 702) of the valve against the restoring force.

22. Dry coupling according to claim 21, **characterised in that** the dry-coupling plug-in part (7) has a pressure force means (76) which acts on the plug-in-part valve body (751) with the restoring force.

23. Dry coupling according to claim 21 or 22, **characterised in that** the dry-coupling plug-in part (7) has a circumferential connecting groove (73) in which connecting elements (66) of the dry-coupling receiving part (6) engage, latch-free in the circumferential direction.

## Revendications

1. Élément de logement d'un embrayage à sec (6) pour embrayage à sec (100) pour liquides, comprenant
(i) un boîtier d'élément de logement (61) tubulaire s'étendant axialement le long d'un axe central d'élément de logement (60), doté d'une première extrémité de boîtier (611) destinée à être couplée avec une fiche d'embrayage à sec (7) de l'embrayage à sec (100) ainsi que d'une deuxième extrémité de boîtier (612) destinée à être reliée à une pièce de conduite,
(ii) un dispositif de soupape d'élément de logement (1) agencé dans le boîtier d'élément de logement (61), formé d'une bague de siège de guidage (2) dotée d'une paroi intérieure de bague de siège (21), ainsi que d'un corps de soupape (3) mobile de façon coulissante dans le sens axial, monté radialement sur la bague de siège de guidage (2) au moyen d'un palier radial de guidage (25) et traversant d'une partie la bague de siège de guidage (2), le boîtier d'élément de logement (61) et la bague de siège de guidage (2) présentant, pour le couplage avec la fiche d'embrayage à sec (7), des pièces de raccordement (28, 66) aptes à être couplées qui sont conçues pour réaliser une liaison rigide en rotation entre la bague de siège de guidage (2) et la fiche d'embrayage à sec (7) ainsi que pour réaliser une liaison de rotation entre le boîtier d'élément de logement (61) et la fiche d'embrayage à sec (7),
- le corps de soupape (3) présentant une tête de soupape (31), un pied de soupape (32) situé à l'extérieur de la bague de siège de guidage (2) ainsi qu'un élément de tige de soupape (33) monté sur la paroi intérieure de la bague de siège (21) au moyen du palier radial de guidage (25), lequel élément de tige de soupape relie la tête de soupape (31) au pied de soupape (32) et les met à distance l'un de l'autre dans le sens axial,
- la bague de siège de guidage (2) présentant à une première extrémité de bague de siège (23) un siège de soupape (41) qui forme avec la tête de soupape (31) une soupape d'élément de logement (4), la tête de soupape (31) pénétrant de manière hermétique dans le siège de soupape (41) en position de fermeture de soupape (401) et saillant au-dehors de la bague de siège de guidage (2) à la première extrémité de bague de siège (23) en position d'ouverture de la soupape (402), et
- le boîtier d'élément de logement (61) et la bague de siège de guidage (2) étant agencés en rotation l'un par rapport à l'autre autour de l'axe de l'élément de logement (60) pour le couplage et le découplage avec la fiche d'embrayage à sec (7);
(iii) un dispositif de commande d'élément de logement (5), au moyen duquel le corps de soupape (3) peut être déplacé dans la position d'ouverture de la soupape (402) ainsi que, à l'inverse, dans la position de fermeture de la soupape (401), comprenant une douille de commande (51) rotative autour de l'axe de l'élément de logement (60) et dotée d'une coulisse de guidage (53), ainsi que d'éléments de commande (55) qui sont agencés sur le pied de soupape (32) et qui pénètrent dans la coulisse de guidage (53), des axes centraux (30, 50, 20) du corps de soupape (3), de la douille de commande (51) et de la bague de siège de guidage (2) étant coaxiaux avec l'axe de l'élément de logement (60), la bague de siège de guidage (2) et la douille de commande (51) formant un espace de passage de fluide (62) appliquant un courant de fluide au corps de soupape (3), le corps de soupape (3), monté mobile dans le sens axial, pouvant être mis dans la position de fermeture de soupape (401) voire dans la position d'ouverture de soupape (402) en tournant la douille de commande (51) en fonction du sens et par déplacement axial correspondant, et le boîtier d'élément de logement (61) et la douille de commande (51) étant unis l'un à l'autre pour tourner ensemble autour de l'axe de l'élément de logement (60) ;
(iv) un dispositif de verrouillage (9) pour établir une liaison rigide en rotation et détachable entre le boîtier de l'élément de logement (61) et la bague de siège de guidage (2), comprenant (iv.1) un élément d'encliquetage-verrouillage (91) qui présente un pied d'élément d'encliquetage (93) muni d'une surface de contact en pied (930) en sous-face qui est, sur un chemin circonférentiel circulaire (90) d'une position initiale (901) à une position de verrouillage (902) déterminée et détachable, accolée sous pression contre une surface d'acheminement de guidage (900) correspondante, qui est réalisée sur un rebord de guidage (92) en saillie radiale sur la bague de siège de guidage (2) et qui présente un point d'encliquetage-verrouillage (94) attribué à la position de verrouillage (902), dans lequel le pied de l'élément d'encliquetage (93) est engagé dans la position de verrouillage (902), l'élément d'encliquetage (91) étant monté mobile de façon coulissante sous l'effet de la force de compression dans un palier à glissement (95) agencé sur le boîtier d'élément de logement (61), et (iv.2) un dispositif actionneur (97) doté d'un élément actionneur, formé par un levier d'actionnement (971) qui est articulé pivotant autour d'un axe de pivot du levier (980) à l'aide d'un palier d'articulation (98) et est relié à l'élément d'encliquetage-verrouillage (91) à l'aide d'une liaison d'entraînement (99), l'élément d'encliquetage-verrouillage (91) se trouvant, en fonction de positions de pivot du levier d'actionnement (971), dans une position de déverrouillage et au moins dans une dite position de verrouillage (902),
**caractérisé en ce que** le pied de l'élément d'encliquetage (93) est parallèle à l'axe de l'élément de logement (60), que la surface d'acheminement de guidage (900) est formée par une surface frontale radiale du rebord de guidage (92) et que le levier d'actionnement (971) est un levier à bras unique, l'axe de pivot du levier (980) l'articulant par bras unique étant transversal à l'axe de l'élément de logement (60) et la liaison d'entraînement (99) étant agencée entre l'axe de pivot du levier (980) et une extrémité d'actionnement libre du levier d'actionnement (971).

2. Élément de logement selon la revendication 1, **caractérisé en ce qu'**est réalisée entre le point d'encliquetage-verrouillage (94) et le pied d'élément d'encliquetage (93) une liaison de verrouillage par complémentarité de forme dotée, y compris la surface de contact du pied (930) de l'élément d'encliquetage (91), de surfaces d'encliquetage complémentaires et de forme identique.

3. Élément de logement selon l'une des revendications 1 ou 2, **caractérisé en ce que** le boîtier de l'élément de logement (61) est formé au moins en une partie par un boîtier extérieur d'élément de logement sur lequel est agencé le palier à glissement (95) pour qu'y soit monté l'élément d'encliquetage (91).

4. Élément de logement selon l'une quelconque des revendications 1 à 3, **caractérisé en ce que** le palier à glissement (95) est réalisé avec un dispositif de force de compression (96) actif directement au niveau de l'élément d'encliquetage (91) pour exercer la force de compression.

5. Élément de logement selon l'une quelconque des revendications 1 à 4, **caractérisé en ce que** le point d'encliquetage-verrouillage (94) est formé par une entaille d'encliquetage-verrouillage (941).

6. Élément de logement selon l'une quelconque des revendications 1 à 5, **caractérisé en ce que** l'élément d'encliquetage-verrouillage (91) est formé par un ergot d'encliquetage-verrouillage (911) dont l'axe d'ergot (910) est monté parallèle à l'axe de l'élément de logement (60).

7. Élément de logement selon la revendication 6, **caractérisé en ce que** l'ergot d'encliquetage-verrouillage (911) est monté en rotation autour de l'axe de son ergot (910) et que la surface d'acheminement de guidage (900) ne touche la surface de contact du pied (930) que dans une zone partielle de telle sorte que l'ergot d'encliquetage-verrouillage (911) en contact d'acheminement avec la surface d'acheminement de guidage (900) est mis en rotation autour de l'axe de son ergot (910).

8. Élément de logement selon l'une quelconque des revendications 1 à 7, **caractérisé en ce que** l'axe de pivot de levier (980) est agencé à proximité de la cloison (614) du boîtier d'élément de logement (61).

9. Élément de logement selon la revendication 8, **caractérisé en ce que** l'axe de pivot de levier (980) coupe la section transversale cylindrique du boîtier de l'élément de logement (61).

10. Élément de logement selon l'une quelconque des revendications 1 à 9, **caractérisé en ce que** la liaison d'entraînement (99) est espacée de l'axe de pivot du levier (980) d'une distance égale à un court tronçon de levier, et de l'extrémité libre du levier d'actionnement (971), d'une distance égale à un long tronçon de levier.

11. Élément de logement selon l'une quelconque des revendications 1 à 10, **caractérisé en ce que** le boîtier de l'élément de logement (61) est relié à une poignée de boîtier (67) saillant dans le sens radial du boîtier de l'élément de logement (61) et destinée à tourner le boîtier de l'élément de logement (61) autour de l'axe de l'élément de logement (60), et que le levier d'actionnement (971) est un élément qui peut être actionné manuellement et qui est agencé dans la zone à laquelle a accès au moins un doigt d'une main saisissant la poignée de préhension du boîtier (67).

12. Élément de logement selon la revendication 11, **caractérisé en ce que** la poignée de préhension du boîtier (67) est une anse en forme d'aile munie d'une bride d'anse (671) et que le levier d'actionnement (971) est agencé entre la bride d'anse (671) et le boîtier de l'élément de logement (61).

13. Élément de logement selon la revendication 12, **caractérisé en ce que** le levier d'actionnement (971) est formé par une plaque d'actionnement qui s'étend entre deux bras d'anse (672) reliant la bride de l'anse (671).

14. Élément de logement selon l'une quelconque des revendications 1 à 13, **caractérisé en ce que** le palier d'articulation (98) du levier d'actionnement (971) est agencé sur la poignée de préhension du boîtier (67).

15. Élément de logement selon l'une quelconque des revendications 1 à 14, **caractérisé en ce que** le palier d'articulation (98) du levier d'actionnement (971) est agencé sur l'extrémité avant de la douille de commande (51).

16. Élément de logement selon l'une quelconque des revendications 1 à 15, **caractérisé en ce que** le dispositif actionneur (97) comprend un actionneur à commande électrique (975).

17. Élément de logement selon la revendication 16, **caractérisé en ce que** l'actionneur à commande électrique fixe de manière commandée l'élément d'encliquetage (91) dans la position de verrouillage (902).

18. Élément de logement selon l'une quelconque des revendications 1 à 17, **caractérisé en ce que** la coulisse de guidage (53) du dispositif de commande de l'élément de logement (5) présente au moins une came (530) dotée d'un point d'encliquetage de came (570), laquelle est attribuée à la position d'ouverture de la soupape (402) et à laquelle appartient une dite position de verrouillage (902) de l'élément d'encliquetage-verrouillage (91).

19. Élément de logement selon l'une quelconque des revendications 1 à 18, **caractérisé en ce que** la coulisse de guidage (53) du dispositif de commande de l'élément de logement (5) présente au moins un point d'encliquetage de came (570) qui est attribué à la position de verrouillage (902) du chemin circonférentiel de l'élément d'encliquetage (90).

20. Élément de logement selon l'une quelconque des revendications 1 à 19, **caractérisé en ce que** le boîtier de l'élément de logement (61) et la douille de commande (51) sont deux composants séparés qui sont reliés l'un à l'autre rigide en rotation au moyen d'une liaison par complémentarité de forme (8).

21. Embrayage à sec (100) pour liquides formé par un élément de logement pour embrayage à sec (6) selon l'une quelconque des revendications 1 à 20 et une fiche d'embrayage à sec (7) raccordée à l'élément de logement pour embrayage à sec (6), dotée d'un dispositif de soupape de fiche (75) présentant un corps de soupape de fiche (751), le corps de soupape (3) de l'élément de logement pour embrayage à sec (6) et le corps de soupape de fiche (751) de la fiche d'embrayage à sec (7) étant l'un à côté de l'autre dans un assemblage de glissement déplaçable dans le sens axial qui peut être mis dans des positions d'ouverture de soupape (402, 702) contre toute force de rappel issue des positions de fermeture de soupape (401, 701) correspondantes.

22. Embrayage à sec selon la revendication 21, **caractérisé en ce que** la fiche d'embrayage à sec (7) présente un dispositif de force de compression (76) qui applique la force de rappel au corps de soupape de la fiche (751).

23. Embrayage à sec selon l'une des revendications 21 ou 22, **caractérisé en ce que** la fiche d'embrayage à sec (7) présente un écrou de serrage de circonférence (73) dans lequel des éléments de serrage (66) de l'élément de logement de l'embrayage à sec (6) s'engagent sans déclic dans le sens de la circonférence.
